(19) Europäisches Patentamt
European Patent Office
Office européen des brevets

(11) **EP 3 812 082 A1**

(12) **EUROPEAN PATENT APPLICATION**
published in accordance with Art. 153(4) EPC

(43) Date of publication:
**28.04.2021 Bulletin 2021/17**

(21) Application number: **19821520.4**

(22) Date of filing: **21.06.2019**

(51) Int Cl.:
**B23K 31/00** (2006.01) **B21C 37/08** (2006.01)
**B21D 22/20** (2006.01) **C21D 9/08** (2006.01)
**C21D 9/50** (2006.01) **C22C 38/00** (2006.01)
**C22C 38/58** (2006.01) **C23C 2/12** (2006.01)

(86) International application number:
**PCT/JP2019/024696**

(87) International publication number:
**WO 2019/245025 (26.12.2019 Gazette 2019/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **22.06.2018 JP 2018119189**
**22.06.2018 JP 2018119190**

(71) Applicant: **NIPPON STEEL CORPORATION**
**Chiyoda-ku**
**Tokyo 100-8071 (JP)**

(72) Inventors:
• **YASUYAMA Masanori**
  **Tokyo 100-8071 (JP)**

• **FUJIMOTO Hiroki**
  **Tokyo 100-8071 (JP)**
• **TATSUMI Yujiro**
  **Tokyo 100-8071 (JP)**
• **SUZUKI Yuki**
  **Tokyo 100-8071 (JP)**
• **FUKUCHI Hiroshi**
  **Tokyo 100-8071 (JP)**
• **KOBAYASHI Shintaro**
  **Tokyo 100-8071 (JP)**

(74) Representative: **Vossius & Partner**
**Patentanwälte Rechtsanwälte mbB**
**Siebertstrasse 3**
**81675 München (DE)**

(54) **STEEL PLATE, TAILORED BLANK, HOT PRESS-FORMED PRODUCT, STEEL PIPE, HOLLOW QUENCHED FORMED PRODUCT, AND METHOD FOR MANUFACTURING STEEL PLATE**

(57)    This steel sheet has a base steel sheet, a coated portion, and an exposed portion, the shape of the end edge side of the steel sheet and the end portion on the outer side of the base steel sheet is a protruded curve represented by a curvature radius R1 and R1 is 5 μm or more.

FIG. 1

EP 3 812 082 A1

## Description

[Technical Field of the Invention]

The present disclosure relates to a steel sheet, a tailored blank, a hot stamped product, a steel pipe, a hollow hot stamped product, and a method of manufacturing the steel sheet.

The present application claims priority based on Japanese Patent Application No. 2018-119189 filed in Japan on Jun. 22, 2018, and Japanese Patent Application No. 2018-119190 filed in Japan on Jun. 22, 2018, the contents of which are incorporated herein.

[Related Art]

In recent years, in order to reduce the emission amount of $CO_2$ gas from the viewpoint of protecting the global environment, the weight reduction of vehicle bodies has been an urgent problem in the automotive field. In order to solve this problem, studies on the application of high-strength steel sheets have been actively carried out, and the strength of steel sheets has been gradually increasing.

As one of techniques for forming vehicle members, hot press forming (hereinafter sometimes referred to as "hot stamping") has attracted attention. In the hot stamping, a steel sheet is heated at a high temperature, press-formed in a temperature range Ar3 transformation temperature or higher, and rapidly cooled through heat transfer using a die, and transformation is caused simultaneously with forming in a state of application of a pressing pressure. The hot stamping is a technique capable of manufacturing a hot stamped product (hereinafter, sometimes referred to as "hot-stamping formed product") having high strength and excellent shape fixability by the above-described procedure.

In addition, in order to improve the yield and functionality of press-formed products for vehicle members, a butt-welded member obtained by butting the end surfaces of at least two steel sheets and joining the end surfaces of the steel sheets by laser welding, plasma welding, or the like (hereinafter sometimes referred to as "tailored blank") is suitably applied as a material for pressing. Since a plurality of steel sheets are joined according to the purpose in the tailored blank, the use of the tailored blank enables change freely in the sheet thickness and the strength in a single product. As a result, the tailored blank enables the improvement of the functionality of the vehicle member and a reduction in the number of vehicle members. In addition, it is possible to manufacture a high-strength press-formed product in which the sheet thickness, strength, and the like are freely changed by performing hot stamping using the tailored blank.

In a case where a vehicle member is formed by hot stamping using a tailored blank as a material for pressing, the tailored blank is heated in a temperature range of, for example, 800°C to 1000°C. Therefore, for the tailored blank for hot stamping, a steel sheet coated with an aluminum coating such as Al-Si coating having a high coating boiling point is often used.

Until now, as a steel sheet for forming a tailored blank, for example, a steel sheet having a coating layer has been studied in various ways (for example, refer to Patent Documents 1 to 7).

[Prior Art Document]

[Patent Document]

[Patent Document 1] Published Japanese Translation No. 2009-534529 of the PCT International Publication
[Patent Document 2] Published Japanese Translation No. 2015-525677 of the PCT International Publication
[Patent Document 3] Published Japanese Translation No. 2015-523210 of the PCT International Publication
[Patent Document 4] Published Japanese Translation No. 2015-536246 of the PCT International Publication
[Patent Document 5] Japanese Unexamined Patent Application, First Publication No. 2013-220445
[Patent Document 6] Chinese Patent Application, Publication No. 106334875
[Patent Document 7] Japanese Unexamined Patent Application, First Publication No. 2016-073989

[Disclosure of the Invention]

[Problems to be Solved by the Invention]

However, in the conventional steel sheets, the fatigue strength of the joint and the corrosion resistance after painting of the welded portion have been insufficient. An object of the present disclosure is to provide a steel sheet that has excellent fatigue strength of the joint and excellent corrosion resistance after painting of the welded portion even after painting of the welded portion formed during butt welding, a tailored blank, a hot stamped product, a steel pipe, a hollow hot stamped product, and a method of manufacturing the steel sheet.

[Means for Solving the Problem]

Means for solving the above problems include the following embodiments.

<1> A steel sheet including: a base steel sheet; a coated portion in which an intermetallic compound layer and an aluminum coating layer are provided on a surface of the base steel sheet in order from the base steel sheet side; and an exposed portion in which the base steel sheet is exposed, in which in a first direction which is perpendicular to a thickness direction of the steel sheet and is directed from the coated portion to one end edge of the steel sheet, at least the coated portion, the exposed portion, and the end edge of the steel sheet are disposed in this order on both surfaces of the base steel sheet, when viewing a cross section parallel to each of the first direction and the thickness direction of the steel sheet, a shape of an end portion of the coated portion which is located on the end edge side of the steel sheet and located from an inner side of the base steel sheet toward the surface of the base steel sheet is a curve represented by a curvature radius R1 protruding toward the first direction side, and R1 satisfies the following Expression (1).

$$\text{Expression (1) } 5\mu m \leq R1$$

<2> The steel sheet according to <1>, in which, in the cross section, a shape of an end portion of the exposed portion on the coated portion side is a recessed curve represented by a curvature radius R2, and R2 satisfies the following Expression (2).

$$\text{Expression (2): } 260 \ \mu m \leq R2$$

<3> The steel sheet according to <2>, in which, in the cross section, when in a depth in the thickness direction from a virtual line formed by extending a surface of the aluminum coating layer of the coated portion in the first direction to the surface of the base steel sheet, a depth of the exposed portion is denoted by D, a relationship between D, R1, and R2 satisfies the following Expression (3).

$$\text{Expression (3): } D \leq (R1 + R2)$$

<4> The steel sheet according to any one of <1> to <3>, in which the base steel sheet includes, as a chemical composition, by mass%, C: 0.02% to 0.58%, Mn: 0.20% to 3.00%, Al: 0.005% to 0.06%, P: 0.03% or less, S: 0.010% or less, N: 0.010% or less, Ti: 0% to 0.20%, Nb: 0% to 0.20%, V: 0% to 1.0%, W: 0% to 1.0%, Cr: 0% to 1.0%, Mo: 0% to 1.0%, Cu: 0% to 1.0%, Ni: 0% to 1.0%, B: 0% to 0.0100%, Mg: 0% to 0.05%, Ca: 0% to 0.05%, REM: 0% to 0.05%, Sn: 0% to 0.5%, Bi: 0% to 0.05%, Si: 0% to 2.00%, and a remainder: Fe and impurities.

<5> The steel sheet according to any one of <1> to <4>, in which an average thickness of the aluminum coating layer is 8 $\mu$m to 35 $\mu$m, and an average thickness of the intermetallic compound layer is 3 $\mu$m to 10 $\mu$m.

<6> A tailored blank including a weld metal portion adjacent to the exposed portion of the steel sheet according to any one of <1> to <5>.

<7> A tailored blank including: at least two steel sheets according to any one of <1> to <5>; and a weld metal portion adjacent to the exposed portion, in which in a steel sheet A having a smaller product of a sheet thickness of the steel sheet and a tensile strength of the steel sheet after hot press forming, of the at least two steel sheets,

when viewing the steel sheet A from a cross section parallel to each of a second direction which is directed from the coated portion to the weld metal portion and a thickness direction of the steel sheet, and

a length in the thickness direction from a virtual line formed by extending a surface of the aluminum coating layer of the coated portion in the second direction to a surface of the base steel sheet is denoted as a depth of the exposed portion,

a depth D1 ($\mu$m) of the exposed portion formed on a surface of a first surface of the steel sheet A, a depth D2 ($\mu$m) of the exposed portion formed on a surface of a second surface of the steel sheet A, and a sheet thickness t ($\mu$m) of the steel sheet A satisfy the following Expression (4).

Expression (4): $((D1 + D2)/t) \times 100 \leq 20$

<8> A hot stamped product using the tailored blank according to <6> or <7>.
<9> A steel pipe including a weld metal portion adjacent to the exposed portion of the steel sheet according to any one of <1> to <5>.
<10> A hollow hot stamped product using the steel pipe according to <9>.
<11> A method of manufacturing the steel sheet according to any one of <1> to <5> including: forming the exposed portion by cutting with an end mill.

[Effects of the Invention]

According to the present disclosure, a steel sheet that has excellent fatigue strength of the joint and excellent corrosion resistance after painting of the welded portion even after painting of the welded portion formed during butt welding, a tailored blank, a hot stamped product, a steel pipe, a hollow hot stamped product, and a method of manufacturing the steel sheet are provided.

[Brief Description of the Drawings]

Fig. 1 is a schematic cross-sectional view showing an example of an end portion of a steel sheet of the present disclosure.
Fig. 2 is an enlarged cross-sectional view showing an example of an end portion of the steel sheet of the present disclosure.
Fig. 3 is an enlarged cross-sectional view showing another example of an end portion of the steel sheet of the present disclosure.
Fig. 4 is a cross-sectional view showing an example of a tailored blank of the present disclosure.
Fig. 5 is a schematic cross-sectional view showing another example of an end portion of the steel sheet of the present disclosure.
Fig. 6 is an enlarged cross-sectional view showing another example of an end portion of the steel sheet of the present disclosure.
Fig. 7 is an enlarged cross-sectional view showing another example of an end portion of the steel sheet of the present disclosure.
Fig. 8 is a cross-sectional view showing another example of the tailored blank of the present disclosure.
Fig. 9 is an enlarged cross-sectional view showing another example of an end portion of the steel sheet of the present disclosure.
Fig. 10 is an enlarged cross-sectional view showing an end portion of Comparative Example 18.

[Embodiments of the Invention]

Hereinafter, examples of preferable embodiments of the present disclosure will be described in detail.
In the present specification, a numerical range expressed using "to" means a range including numerical values described before and after "to" as the lower limit value and the upper limit value, respectively.
In the present specification, regarding the amount of a component (element), for example, in a case of C (carbon) content, the C content may be expressed as "amount of C". Moreover, the amount of another element may be expressed similarly.
In the present specification, the meaning of the term "step" is not limited to an independent step, and also includes the case when the intended purpose of the step is achieved even in a case where the step cannot be clearly distinguished from other steps.
In the present disclosure, the terms "base steel sheet", "intermetallic compound layer", and "aluminum coating layer" are described in "Definitions of Ranges of Base Steel Sheet, Intermetallic Compound Layer, and Aluminum Coating Layer", which will be described later.
In the present disclosure, the term "thickness direction" means a direction in which the sheet thickness at the center portion of the sheet width of the steel sheet is measured.
In the present disclosure, the term "end surface of the steel sheet" means a surface which is exposed in a direction orthogonal to the thickness direction in the surface of the steel sheet.

In the present disclosure, the term "end edge of the steel sheet" means a portion adjacent to the end surface of the steel sheet.

In the present specification, the term "end portion of the steel sheet" represents a region which is located around the steel sheet and is in a range 20% or less of the dimension of the entire sheet width (that is, the length from one end edge to another end edge, facing each other, of the steel sheet) from the end surface of the steel sheet. That is, the "end portion" occupies a region including both ends of 20% (total 40%) of the dimension of the entire sheet width.

In the present specification, the term "center portion of the steel sheet" represents a region excluding a region which is in a range of 20% or less of the dimension of the entire sheet width (that is, the length from one end edge to another end edge, facing each other) from the end surface of the region. That is, the "center portion" of the steel sheet is a region other than an end portion of the steel sheet and accounts for 60% of the dimension of the entire sheet width.

In the present specification, the term "end portion of the coated portion" represents a region which is located around the coated portion and in a range of 20% or less of the dimension of the entire width of the coated portion from the end surface of the coated portion (that is, the length from one end edge to another end edge of the coated portion, facing each other).

In the present specification, the term "end portion of the exposed portion" represents a region which is in a range of 20% or less of the width of the exposed portion from the end of the exposed portion.

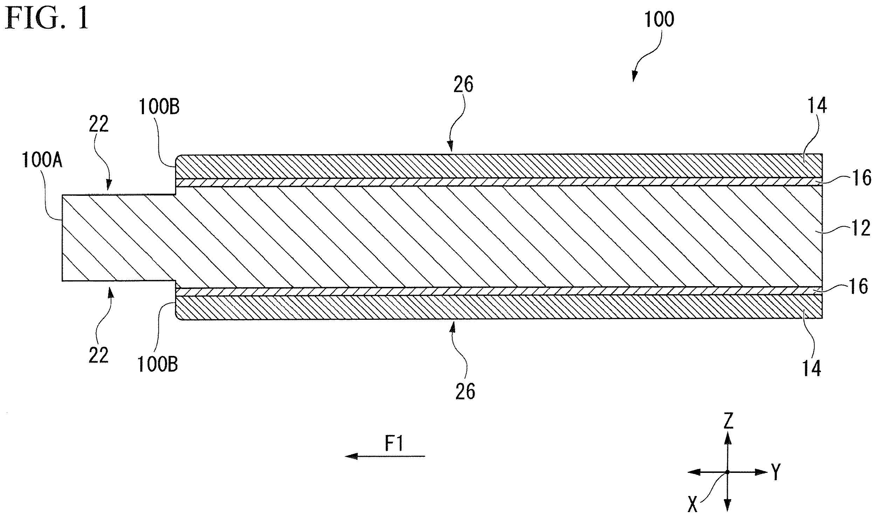

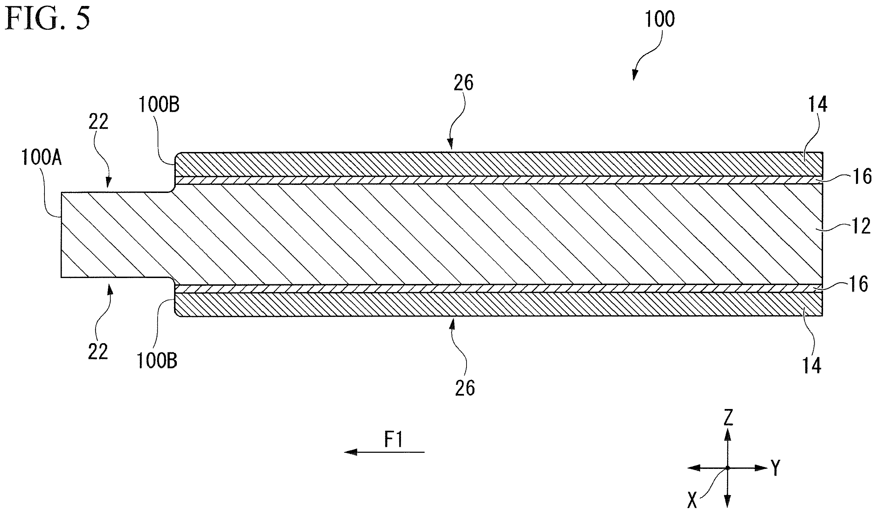

In the present specification, the term "cross section" of the steel sheet represents a cross section cut in the sheet thickness direction. Specifically, in Figs. 1 and 5, a thickness direction of a steel sheet 100 is denoted by Z, and a longitudinal direction of an exposed portion 22 (a direction orthogonal to a display surface in Figs. 1 and 5) is denoted by X. A direction orthogonal to the direction Z and the direction X is denoted by Y. At this time, the cross section means a cross section cut along a YZ plane.

In the present specification, the term "welded portion" represents a region including a weld metal portion, an exposed portion of the steel sheet located around the weld metal portion, and a portion around the welded metal side of a coated portion.

<Steel Sheet>

The steel sheet of the present disclosure has a base steel sheet, an aluminum coating layer provided on both surfaces of the base steel sheet, and an intermetallic compound layer formed between the base steel sheet and the aluminum coating layer.

In addition, the steel sheet of the present disclosure has an exposed portion in which the base steel sheet is exposed on both surfaces of the end portion of the steel sheet, and a coated portion which is a remaining portion formed on a side closer to the center than to the exposed portion (hereinafter sometimes referred to as "coated portion") and in which the aluminum coating layer and the intermetallic compound layer remain in a region other than the exposed portion. That is, in the steel sheet of the present disclosure, in the first direction, at least the coated portion, the exposed portion, and the end edge of the steel sheet are disposed in this order on both surfaces of the base steel sheet.

Further, when the boundary between the exposed portion and the coated portion is viewed from the cross section, the steel sheet of the present disclosure has a coated portion formed with a protruded curve represented by a curvature radius R1 on the outer surface side of the steel sheet at the boundary between the exposed portion and the coated portion. Then, R1 satisfies the following Expression (1). That is, in the steel sheet of the present disclosure, when viewing a cross section parallel to each of the first direction and the thickness direction of the steel sheet, the shape of an end portion of the coated portion which is located on the end edge side of the steel sheet and located from the inner side of the base steel sheet toward the surface of the base steel sheet is a protruded curve represented by a curvature radius R1 protruding toward the first direction side, and R1 satisfies the following Expression (1). In addition, in the steel sheet of the present disclosure, the shape of an end portion of the exposed portion on the coated portion side may be a recessed curve represented by a curvature radius R2. In addition, in a case where the end portion of the exposed portion is a recessed curve represented by a curvature radius R2, R2 satisfies the following Expression (2).

$$\text{Expression (1): } 5\ \mu m \leq R1$$

$$\text{Expression (2): } 260\ \mu m \leq R2$$

Note that the shape of the steel sheet is not particularly limited.

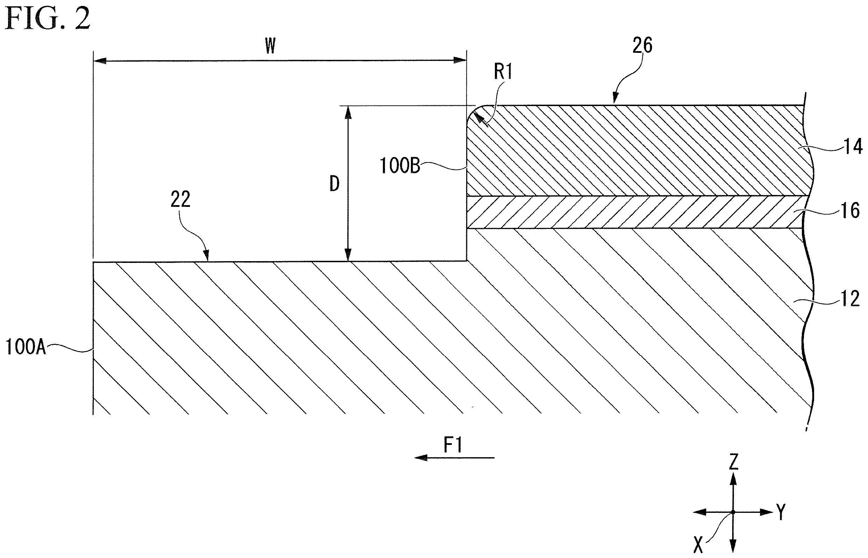

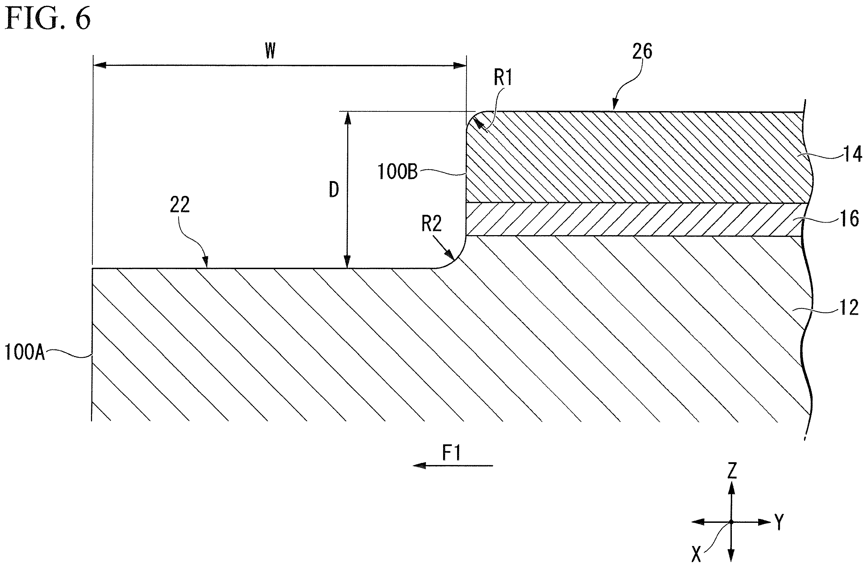

Fig. 1 is a schematic cross-sectional view showing an example of an end portion of the steel sheet of the present disclosure. Fig. 2 is an enlarged cross-sectional view showing an example of an end portion of the steel sheet of the present disclosure. Fig. 5 is a schematic cross-sectional view showing another example of an end portion of the steel sheet of the present disclosure. Fig. 6 is an enlarged cross-sectional view showing another example of an end portion of the steel sheet of the present disclosure.

In Figs. 1, 2, 5, and 6, 100 represents a steel sheet, 12 represents a base steel sheet, 14 represents an aluminum coating layer, 16 represents an intermetallic compound layer, 22 represents an exposed portion, and 26 represents a coated portion.

In addition, 100A represents an end surface of the steel sheet 100, and 100B represents the boundary between the exposed portion 22 and the coated portion 26. D represents a depth in the vertical direction (thickness direction of the steel sheet) from a virtual line formed by extending the surface of the aluminum coating layer 14 (the surface of the steel sheet 100 on the outer surface side) to the direction of the exposed portion 22 (first direction) to the surface of the base steel sheet 12 (hereinafter sometimes referred to as "removal depth"). W represents the width of the exposed portion 22. Here, F1 represents a first direction which is perpendicular to the thickness direction of the steel sheet and is a direction (Y direction) directed from the coated portion to one end edge of the steel sheet.

As shown in Figs. 1 and 5, in the steel sheet 100 of the present disclosure, the aluminum coating layers 14 are formed on both surfaces of the base steel sheet 12, and the intermetallic compound layer 16 is formed between the base steel sheet 12 and the aluminum coating layer 14.

In addition, as shown in Figs. 1, 2, 5, and 6, the exposed portion 22, in which the base steel sheet 12 is exposed, is formed on both surfaces of the end portion of the steel sheet 100, and the coated portion 26 is formed in a region which is located on a side closer to the center than to the exposed portion 22 and is a region other than the exposed portion 22. That is, the exposed portion 22 is formed in a region from the end edge of the end surface 100A of the steel sheet 100 to the boundary 100B between the exposed portion 22 and the coated portion 26.

Further, as shown in Figs. 2 and 6, the steel sheet 100 of the present disclosure has the aluminum coating layer 14 of the coated portion 26 in the boundary 100B on the outer surface side of the steel sheet 100 (on the aluminum coating layer 14 side) when viewing the cross section of the boundary 100B between the exposed portion 22 and the coated portion 26 (the cut section along the sheet thickness direction of the steel sheet 100, that is, the cross section parallel to each of the first direction F1 and the thickness direction of the steel sheet 100). The steel sheet 100 of the present disclosure has the exposed portion 22 in the boundary 100B on the base steel sheet 12 side. Further, the center portion and the end portion on the base steel sheet 12 side of the boundary 100B extend in a direction along the thickness direction. In the aluminum coating layer 14 of the coated portion 26 provided in the boundary 100B on the outer surface side of the steel sheet 100, a protruded curve is formed toward the outside of the aluminum coating layer 14, and the curvature radius is denoted by R1. In the steel sheet 100 of the present disclosure, R1 is 5 $\mu$m or more. That is, R1 satisfies the relationship of Expression (1): 5 $\mu$m $\leq$ R1. On the other hand, as shown in Fig. 6, in the exposed portion 22 of the boundary 100B on the other end side, a recessed curve is formed toward the inner side of the base steel sheet 12, and the curvature radius is denoted by R2. That is, the shape of the end portion of the exposed portion 22 on the coated portion 26 side is a recessed curve. R2 satisfies the relationship of Expression (2): 260 $\mu$m $\leq$ R2.

Note that the steel sheet 100 of the present disclosure has been described with reference to Figs. 1, 2, 5, and 6, but the steel sheet 100 of the present disclosure is not limited thereto.

Conventionally, a tailored blank is known which is formed by butt-welding a steel sheet coated with a metal containing aluminum as a main component by a welding method such as laser welding, plasma welding, and the like. In the tailored blank, a large amount of aluminum derived from the aluminum coating may be mixed in the weld metal portion in some cases. When the tailored blank thus obtained is hot stamped, the weld metal portion of the butt-welded portion may be softened in some cases. For example, as a result of the tensile strength test of a portion including the weld metal portion in the tailored blank after hot stamping, an example in which fracture occurs in the weld metal portion has been reported.

In terms of preventing fracture in the weld metal portion, for example, in Patent Document 1, as the steel sheet from which the aluminum coating layer 14 of the welding scheduled portion to be welded is removed and in which the intermetallic compound layer 16 is allowed to remain, a tailored blank obtained by butt-welding the welding scheduled portions of the steel sheet is disclosed.

However, in a tailored blank obtained by using a steel sheet in which the intermetallic compound layer 16 is allowed to remain by removing the aluminum coating layer 14 and performing butt welding in a state in which the end surfaces of regions in which the intermetallic compound layer 16 remains are butted together, the fatigue strength of the joint is deteriorated.

In the case of a steel sheet in which the intermetallic compound layer 16 is allowed to remain in the welding scheduled portion, the hard and brittle intermetallic compound layer 16 remains and thus there is an influence of the intermetallic compound layer 16 remaining between the weld metal portion and a region in which the aluminum coating layer 14 is not removed (stress concentration portion). As a result, when a load is repeatedly applied to a hot-stamping formed product using a tailored blank which is formed of the steel sheet disclosed in Patent Document 1, the fatigue strength of the joint is deteriorated. Accordingly, the steel sheet from which only the aluminum coating layer 14 of the welding scheduled portion is removed and in which the intermetallic compound layer 16 is allowed to remain is not sufficiently applied to a portion where fatigue properties are important.

In addition, in Patent Documents 2 to 6, as the steel sheet from which the aluminum coating layer 14 of the welding scheduled portion to be welded and the intermetallic compound layer 16 are removed, a tailored blank obtained by butt-welding the welding scheduled portions of the steel sheet is disclosed.

However, in the steel sheet disclosed in Patent Documents 2 to 6, at the boundary between the exposed portion 22 and the coated portion 26, variation in the thickness of the painted film after painting occurs depending on the shape of the cross section of the boundary, and thus the corrosion resistance after painting in the welded portion is deteriorated. In addition, when the intermetallic compound layer and the aluminum coating layer are removed, a part of the base steel sheet is also removed with the intermetallic compound layer and the aluminum coating layer in some cases. As a result, depending on the state in which the base steel sheet has been removed, the fatigue strength and the static strength of the joint are deteriorated.

On the other hand, Patent Document 7 discloses processing the side surface of the drilled hole into a protruded shape surface from the viewpoint of securing the corrosion resistance after painting of the drilled surface.

However, in the technique disclosed in Patent Document 7, drilling by laser cutting is performed. This technique is a method in which the shape is formed by fusion cutting due to the irradiation direction of a laser beam, and thus is not a technique suitable for removing both layers of the intermetallic compound layer 16 and the aluminum coating layer 14.

In contrast to this technique, in the steel sheet 100 of the present disclosure, the aluminum coating layer 14 and the intermetallic compound layer 16 on both surfaces are removed in at least a part of the end portion of the steel sheet 100, and the exposed portion 22 in which the base steel sheet 12 is exposed is provided. In addition, the steel sheet 100 of the present disclosure has the coated portion 26 in which the aluminum coating layer 14 and the intermetallic compound layer 16 are not removed. Further, the steel sheet 100 of the present disclosure has the aluminum coating layer 14 which is a coated portion 26 formed by a protruded shape represented by a curvature radius R1 on the outer surface side of the steel sheet 100 in the cross section part of the boundary between the exposed portion 22 and the coated portion 26. Then, R1 is 5 $\mu$m or more.

When the steel sheet 100 of the present disclosure has the aluminum coating layer 14 of the coated portion 26 in which the curvature radius is represented by R1 at the boundary between the exposed portion 22 and the coated portion 26 on the outer surface side of the steel sheet 100, occurrence of variation in the thickness of the painted film is prevented even in a case where painting is applied around the welded portion. Thus, the corrosion resistance after painting of the welding is secured. Note that in a case where R1 is too small, variation in the thickness of the painted film becomes large. Therefore, by setting R1 to 5 $\mu$m or more, the corrosion resistance after painting is secured.

By providing the exposed portion 22 in which the curvature radius is represented by R2 on the other end side of the boundary 100B (end portion side of the exposed portion 22 on the coated portion 26 side), a decrease in the fatigue strength of the joint obtained by using the steel sheet 100 is prevented. That is, the shape of the end portion of the exposed portion 22 on the coated portion 26 side is a recessed curve represented by the curvature radius R2, thus preventing a decrease in the fatigue strength of the joint obtained by using the steel sheet 100 in which the stress concentration is reduced and the base steel sheet 12 is exposed.

Note that in a case where R2 is too small, the stress concentration becomes high when a load of the stress is applied to the joint. Therefore, by setting R2 to 260 $\mu$m or more, the fatigue strength of the joint is secured. Note that the steel sheet 100 of the present disclosure having the above-described configuration provides excellent static strength of the joint of the butt-welded members produced by using the steel sheet 100 of the present disclosure.

When R1 is 5 $\mu$m or more and R2 is 260 $\mu$m or more, the corrosion resistance after painting is further improved more than the case where only the condition of R1 is satisfied, which is preferable.

Accordingly, a tailored blank (butt-welded member) obtained by using the steel sheets 100 of the present disclosure and butt-welding the end surfaces of the end portions having the exposed portion 22 does not have a hard and brittle intermetallic compound layer 16 between the weld metal portion and the coated portion 26. In addition, the outer surface side of the steel sheet 100 at the boundary between the exposed portion 22 and the coated portion 26 satisfies the above-described condition. For this reason, even in a case where the tailored blank according to the steel sheet 100 of the present disclosure is formed into a hot-stamping formed product, it is considered that deterioration in the fatigue strength of the joint is prevented. Further, since variation in the thickness of the painted film after painting is prevented, it is considered that the corrosion resistance after painting of the welded portion is excellent even after painting is applied to the hot-stamping formed product.

Hereinafter, the steel sheet of the present disclosure will be described.

[Base steel sheet]

The base steel sheet 12 is a steel sheet before the aluminum coating layer 14 is provided. The base steel sheet 12 may be obtained by a common method, and is not particularly limited. The base steel sheet 12 may be a hot rolled steel sheet or a cold rolled steel sheet. In addition, the thickness of the base steel sheet 12 may be a thickness set according to the purpose and is not particularly limited. For example, the sheet thickness of the base steel sheet 12 is 0.8 mm to 4 mm, and further 1 mm to 3 mm as the sheet thickness of the entire steel sheet after the aluminum coating layer 14 is provided.

As the base steel sheet 12, for example, a steel sheet formed to have high mechanical strength (which means, for example, properties related to mechanical deformation and fracture such as tensile strength, yield point, elongation, reduction in area, hardness, impact value, and fatigue strength) may be used. Specifically, a steel sheet having a tensile strength of 400 to 2700 MPa can be used. The sheet thickness is 0.7 mm to 3.2 mm. A steel sheet having low mechanical strength may be used as the base steel sheet 12. Specifically, the steel sheet having low mechanical strength includes steel sheets of 1300 MPa class, 1200 MPa class, 1000 MPa class, 600 MPa class, and 500 MPa class. For example, in the case of a B pillar of a vehicle, it is desirable that a steel sheet having a tensile strength of 1500 to 2000 MPa class be used for a portion from the upper portion to the center portion to prevent deformation, and a steel sheet having a tensile strength of 500 MPa class to 1500 MPa class is used for the lower portion of an energy-absorbing portion. More suitably, the lower portion is formed of a steel sheet of 600 MPa class to 1300 MPa class. The sheet thickness of a steel sheet of a B pillar is preferably 1.4 mm to 2.6 mm in the upper portion and 1.0 mm to 1.6 mm in the lower portion.

As one example of the base steel sheet 12, for example, a steel sheet formed to have high mechanical strength (which means, for example, properties related to mechanical deformation and fracture such as tensile strength, yield point, elongation, reduction in area, hardness, impact value, and fatigue strength) may be used.

As an example of a preferable chemical composition of the base steel sheet 12, for example, the following chemical composition may be adopted.

The base steel sheet 12 includes, as a chemical composition, by mass%, C: 0.02% to 0.58%, Mn: 0.20% to 3.00%, Al: 0.005% to 0.06%, P: 0.03% or less, S: 0.010% or less, N: 0.010% or less, Ti: 0% to 0.20%, Nb: 0% to 0.20%, V: 0% to 1.0%, W: 0% to 1.0%, Cr: 0% to 1.0%, Mo: 0% to 1.0%, Cu: 0% to 1.0%, Ni: 0% to 1.0%, B: 0% to 0.0100%, Mg: 0% to 0.05%, Ca: 0% to 0.05%, REM: 0% to 0.05%, Sn: 0% to 0.5%, Bi: 0% to 0.05%, Si: 0% to 2.00%, and a remainder: Fe and impurities.

Hereinafter, "%" indicating the amount of a component (element) means "mass%".

(C: 0.02% to 0.58%)

C is an important element that enhances the hardenability of the base steel sheet 12 and mainly determines the strength after quenching. Further, C is an element that lowers an A3 point and promotes a lowering in a quenching treatment temperature. When the amount of C is less than 0.02%, the effect thereof is not sufficient in some cases. Therefore, the amount of C may be 0.02% or more. On the other hand, when the amount of C is more than 0.58%, the toughness of a quenched portion is significantly deteriorated. Therefore, the amount of C may be 0.58% or less. Preferably, the amount of C is 0.45% or less.

(Mn: 0.20% to 3.00%)

Mn is an element that is very effective in enhancing the hardenability of the base steel sheet 12 and stably ensuring the strength after quenching. When the amount of Mn is less than 0.20%, the effect thereof is not sufficient in some cases. Therefore, the amount of Mn may be 0.20% or more. Preferably, the amount of Mn is 0.80% or more. On the other hand, when the amount of Mn is more than 3.00%, the effect thereof is saturated. Further, there are difficulties in ensuring stable strength after quenching in some cases. Therefore, the amount of Mn may be 3.00% or less. Preferably, the amount of Mn is 2.40% or less.

(Al: 0.005% to 0.06%)

Al functions as a deoxidizing element and has an action of improving soundness of the base steel sheet 12. When the amount of Al is less than 0.005%, it is difficult to obtain the effect by the above action in some cases. Therefore, the amount of Al may be 0.005% or more. On the other hand, when the amount of Al is more than 0.06%, the effect by the above action is saturated, resulting in a cost disadvantage. Therefore, the amount of Al may be 0.06% or less. Preferably, the amount of Al is 0.05% or less. Alternatively, the amount of Al is preferably 0.01% or more.

(P: 0.03% or Less)

P is an element that is contained as an impurity. When an excessive amount of P is contained in the base steel sheet, the toughness of the base steel sheet 12 is easily deteriorated. Therefore, the amount of P may be 0.03% or less. The amount of P is preferably 0.01% or less. Although there is no need to particularly define the lower limit of the amount of P, from the viewpoint of cost, the lower limit is preferably 0.0002%.

(S: 0.010% or Less)

S is an element that is contained as an impurity. S forms MnS and has an action of making the base steel sheet 12 brittle. Therefore, the amount of S may be 0.010% or less. The amount of S is more desirably 0.004% or less. Although there is no need to particularly define the lower limit of the amount of S, from the viewpoint of cost, the lower limit is preferably 0.0002%.

(N: 0.010% or Less)

N is an element that is contained in the base steel sheet 12 as an impurity. Further, N is an element that forms an inclusion in the base steel sheet 12 and deteriorates the toughness after hot press forming. Therefore, the amount of N may be 0.010% or less. The amount of N is preferably 0.008% or less and more preferably 0.005% or less. Although there is no need to particularly define the lower limit of the amount of N, from the viewpoint of cost, the lower limit is preferably 0.0002%.

(Ti: 0% to 0.20%, Nb: 0% to 0.20%, V: 0% to 1.0%, and W: 0% to 1.0%)

Ti, Nb, V, and W are elements that promote mutual diffusion of Fe and Al in the aluminum coating layer 14 and the base steel sheet 12. Accordingly, at least one or more of Ti, Nb, V, and W may be contained in the base steel sheet 12. However, 1) when the amount of Ti and the amount of Nb are more than 0.20%, or 2) when the amount of V and the amount of W are more than 1.0%, the effect by the above action is saturated, resulting in a cost disadvantage. Accordingly, the amount of Ti and the amount of Nb may be 0.20% or less, and the amount of V and the amount of W may be 1.0% or less. The amount of Ti and the amount of Nb are preferably 0.15% or less, and the amount of V and the amount of W are preferably 0.5% or less. In order to more reliably obtain the effect by the above action, the lower limit value of the amount of Ti and the amount of Nb is preferably 0.01 %, and the lower limit value of the amount of V and the amount of W is preferably 0.1%.

(Cr: 0% to 1.0%, Mo: 0% to 1.0%, Cu: 0% to 1.0%, Ni: 0% to 1.0%, and B: 0% to 0.0100%)

Cr, Mo, Cu, Ni, and B are elements that are effective in enhancing the hardenability of the base steel sheet 12 and stably ensuring strength after quenching. Accordingly, one or more of these elements may be contained in the base steel sheet 12. However, even when the amounts of Cr, Mo, Cu, and Ni are more than 1.0% and the amount of B is more than 0.0100%, the above effect is saturated, resulting in a cost disadvantage. Accordingly, the amounts of Cr, Mo, Cu, and Ni may be 1.0% or less. In addition, the amount of B may be 0.0100% or less and is preferably 0.0080% or less. In order to more reliably achieve the above effect, it is preferable that the amount of any one of Cr, Mo, Cu, and Ni be 0.1 % or more, and the amount of B be 0.0010% or more.

(Ca: 0% to 0.05%, Mg: 0% to 0.05%, and REM: 0% to 0.05%)

Ca, Mg, and REM have an action of refining the form of inclusions in the steel and have an action of preventing the occurrence of inclusion-derived cracking due to the inclusions during hot press forming. Accordingly, one or more of these elements may be contained in the base steel sheet 12. However, when these elements are added in an excessive amount, the effect of refining the form of inclusions in the base steel sheet 12 is saturated, leading to an increase in cost. Accordingly, the amount of Ca is 0.05% or less, the amount of Mg is 0.05% or less, and the amount of REM is 0.05% or less. In order to more reliably obtain the effect by the above action, it is preferable that any one of Ca: 0.0005% or more, Mg: 0.0005% or more, and REM: 0.0005% or more be satisfied.
Here, REM refers to 17 elements of Sc, Y, and lanthanoids, and the amount of REM refers to the total amount of these elements. Lanthanoids are industrially added to the base steel sheet 12 in the form of misch metal.

(Sn: 0% to 0.5%)

Sn is an element that improves the corrosion resistance of the exposed portion 22. Accordingly, Sn may be contained in the base steel sheet 12. However, when the base steel sheet 12 contains Sn in an amount of more than 0.5%, the base steel sheet 12 becomes brittle. Accordingly, the amount of Sn is 0.5% or less. The amount of Sn is preferably 0.3% or less. In order to more reliably obtain the effect by the above action, the amount of Sn is preferably 0.02% or more. The amount of Sn is more preferably 0.04% or more.

(Bi: 0% to 0.05%)

Bi is an element that becomes a solidification nucleus in a solidification process of molten steel and has an action of reducing a secondary arm space of dendrite and thus suppressing segregation of Mn and the like that segregate within the secondary arm space of the dendrite. Accordingly, Bi may be contained in the base steel sheet 12. In particular, for steel sheets in which a large amount of Mn is often contained, such as steel sheets for hot pressing, Bi is effective in suppressing deterioration in toughness caused by the segregation of Mn. Accordingly, Bi is preferably contained in such a steel type. However, when Bi is contained in the base steel sheet 12 in an amount of more than 0.05%, the effect by the above action is saturated, leading to an increase in cost. Accordingly, the amount of Bi is 0.05% or less. The amount of Bi is preferably 0.02% or less. In order to more reliably obtain the effect by the above action, the amount of Bi is preferably 0.0002% or more. The amount of Bi is more preferably 0.0005% or more.

(Si: 0% to 2.00%)

Si is a solid solution strengthening element and when Si is contained in the base steel sheet 12 up to an amount of 2.00%, Si can be effectively used. However, when Si is contained in the base steel sheet 12 in an amount of more than 2.00%, there is concern that defects may occur in coating properties. Accordingly, in a case where the base steel sheet 12 contains Si, the amount of Si may be 2.00% or less. The upper limit is preferably 1.40% or less and more preferably 1.00% or less. Although the lower limit is not particularly limited, in order to more reliably obtain the effect by the above action, the lower limit is preferably 0.01 %.

(Remainder)

The remainder includes Fe and impurities. Here, examples of impurities include components contained in raw materials such as ores or scraps and components to be mixed in the base steel sheet 12 in the manufacturing process. The impurities mean components that are not intentionally contained in the steel sheet.

[Aluminum Coating Layer]

The aluminum coating layer 14 is formed on both surfaces of the base steel sheet 12. The method of forming the aluminum coating layer 14 is not particularly limited. For example, the aluminum coating layer 14 may be formed on both surfaces of the base steel sheet 12 by a hot dip coating method (a method in which the base steel sheet 12 is immersed in a molten metal bath containing aluminum as a main component to form an aluminum coating layer 14).
Here, the aluminum coating layer 14 is a coating layer containing aluminum as a main component, and may contain 50 mass% or more of aluminum. Depending on the purpose, the aluminum coating layer 14 may contain an element (for example, Si or the like) other than aluminum, and may contain impurities mixed in the manufacturing process. Specifically, the aluminum coating layer 14 may include, for example, as a chemical composition, by mass%, 5% to 12% of Si (silicon) and a remainder including aluminum and impurities. In addition, the aluminum coating layer 14 may include, as a chemical composition, by mass%, 5% to 12% of Si (silicon), 2% to 4% of Fe (iron), and a remainder including aluminum and impurities.
When Si is contained in the aluminum coating layer 14 in the above range, it is possible to prevent workability and corrosion resistance from being lowered. In addition, the thickness of the intermetallic compound layer 16 can be reduced.
The thickness of the aluminum coating layer 14 provided in a region other than the end portion of the steel sheet 100 is not particularly limited and for example, the average thickness may be 8 μm (micrometers) or more and is preferably 15 μm or more. In addition, regarding the thickness of the aluminum coating layer 14 in the coated portion 26, for example, the average thickness may be 50 μm or less and is preferably 40 μm or less, more preferably 35 μm or less, and even more preferably 30 μm or less. The thickness of the aluminum coating layer 14 represents the average thickness in a region other than the end portion of the steel sheet 100.
The aluminum coating layer 14 prevents the base steel sheet 12 from being corroded. In addition, in a case where the steel sheet is processed by hot press forming, even when the base steel sheet 12 is heated to a high temperature, scale (iron compound) generated by oxidation of the surface of the base steel sheet 12 is prevented by the aluminum coating layer 14. In addition, in the aluminum coating layer 14, the boiling point and melting point are higher than those of plating coatings of organic materials and plating coatings of other metal-based materials (for example, zinc-based material). Therefore, when forming a hot stamped product, the coating does not evaporate, and thus the surface protection effect is high.
The aluminum coating layer 14 can be alloyed with iron (Fe) in the base steel sheet 12 by heating during hot dip coating and hot press forming.

[Intermetallic Compound Layer]

The intermetallic compound layer 16 is a layer formed at the boundary portion between the base steel sheet 12 and the aluminum coating layer 14 when aluminum coating is applied to the base steel sheet 12. Specifically, the intermetallic compound layer 16 is formed by a reaction of iron (Fe) of the base steel sheet 12 and a metal containing aluminum (Al) in a molten metal bath containing aluminum as a main component. The intermetallic compound layer 16 is mainly formed of a plurality of kinds of compounds represented by FexAly (x and y represent 1 or more). In a case where the aluminum coating layer 14 includes Si (silicon), the intermetallic compound layer 16 is formed of a plurality of kinds of compounds represented by FexAly and FexAlySiz (x, y, and z represent 1 or more).

The thickness of the intermetallic compound layer 16 formed in a region other than the end portion of the steel sheet 100 is not particularly limited and for example, the average thickness may be 1 μm or more and is preferably 3 μm or more and more preferably 4 μm or more. In addition, regarding the thickness of the intermetallic compound layer 16 formed in a region other than the end portion of the steel sheet 100, for example, the average thickness may be 10 μm or less and is preferably 8 μm or less. The thickness of the intermetallic compound layer 16 represents an average thickness in a region other than the end portion.

The thickness of the intermetallic compound layer 16 can be controlled by the temperature of the molten metal bath containing aluminum as a main component and the immersion time.

Here, confirmation of the base steel sheet 12, the intermetallic compound layer 16, and the aluminum coating layer 14, and measurement of the thicknesses of the intermetallic compound layer 16 and the aluminum coating layer 14 are performed by the following method.

Cutting is performed to expose the cross section of the steel sheet 100, and the cross section of the steel sheet 100 is polished. The direction of the cross section of the exposed steel sheet 100 is not particularly limited. However, the cross section of the steel sheet 100 is preferably a cross section orthogonal to a longitudinal direction of the exposed portion 22. The polished cross section of the steel sheet 100 is subjected to line analysis from the surface of the steel sheet 100 to the base steel sheet 12 using an electron probe micro analyser (FE-EPMA) to measure the concentration of aluminum and the concentration of iron. The concentration of aluminum and the concentration of iron are preferably average values measured three times. The measurement conditions are an acceleration voltage of 15 kV, a beam diameter of about 100 nm, an irradiation time of 1000 ms per point, and a measurement pitch of 60 nm. In addition, the measurement distance may be set such that the thickness of the coating layer can be measured. For example, the measurement distance is about 30 μm to 80 μm from the surface of the steel sheet 100 to the base steel sheet 12 in the sheet thickness direction (thickness direction). The sheet thickness (thickness) of the base steel sheet 12 is preferably measured with an optical microscope using scale.

<Definition of Ranges of Base Steel Sheet, Intermetallic Compound Layer, and Aluminum Coating Layer>

As the measurement values of the concentration of aluminum of the cross section of the steel sheet 100, a region in which the concentration of aluminum (Al) is less than 0.06 mass% is determined as the base steel sheet 12, and a region in which the concentration of aluminum is 0.06 mass% or more is determined as the intermetallic compound layer 16 or the aluminum coating layer 14. In addition, of the intermetallic compound layer 16 and the aluminum coating layer 14, a region in which the concentration of iron (Fe) is more than 4 mass% is determined as the intermetallic compound layer 16 and a region in which the concentration of iron is 4 mass% or less is determined as the aluminum coating layer 14.

The distance from the boundary between the base steel sheet 12 and the intermetallic compound layer 16 to the boundary between the intermetallic compound layer 16 and the aluminum coating layer 14 is assumed as the thickness of the intermetallic compound layer 16. In addition, the distance from the boundary between the intermetallic compound layer 16 and the aluminum coating layer 14 to the surface of the steel sheet 100 in which the aluminum coating layer 14 is formed is assumed as the thickness of the aluminum coating layer 14.

The thickness of the aluminum coating layer 14 and the thickness of the intermetallic compound layer 16 are obtained by performing line analysis from the surface of the steel sheet 100 to the surface of the base steel sheet 12 (the boundary between the base steel sheet 12 and the intermetallic compound layer 16) and measuring the thickness as follows.

The thickness of the aluminum coating layer 14 is determined, according to the above-described determination criteria, by measuring the thickness from the surface of the steel sheet 100 having the aluminum coating layer 14 to the intermetallic compound layer 16 at the positions of five places where the sheet width in a region other than the end portion is divided into five equal parts and obtaining the average value of the obtained values.

For example, in a case where the thickness of the coated portion 26 is measured, when the coated portion 26 in Figs. 1 and 5 is taken as an example, in the longitudinal direction of the exposed portion 22 (an X direction in Figs. 1 and 5, hereinafter, referred to as a third direction), the thickness of the aluminum coating layer 14 is obtained at the positions of five places where the entire length of the coated portion 26 in the third direction is divided into five equal parts (the same applies to the following definition of the entire length) and the average value of the obtained values may be used as the thickness of the aluminum coating layer 14. Here, regarding the measurement position of the thickness in the first direction F1, measurement is performed at a position of 1/2 width of the coated portion 26 in each of the cross-sectional views at the five places (hereinafter, the measurement of the thickness is similarly performed). The width of the coated portion 26 indicates the distance between the end edges of the coated portion 26 in the first direction F1, and is hereinafter also simply referred to as the width of the coated portion 26 below.

The distinction among the aluminum coating layer 14, the intermetallic compound layer 16 and the base steel sheet 12 at the time of measuring the thickness is determined according to the above-described determination criteria. In a case where the exposed portion 22 is provided to extend on the curve, the thickness may be obtained at places where the entire length along the curve is divided into five equal parts.

Similarly, in a case of measuring the thickness of the intermetallic compound layer 16, the thickness of the intermetallic compound layer 16 is obtained at the positions of five places where the entire length of the intermetallic compound layer 16 in the third direction is divided into five equal parts (the same applies to the following definition of the entire length) and the average value of the obtained values is used as the thickness of the intermetallic compound layer 16. In a case where the thickness of the intermetallic compound layer 16 of the coated portion 26 is measured, the measurement is performed at a position of 1/2 width of the coated portion 26, as in a case where the thickness of the aluminum coating layer 14 is measured. Alternatively, the distinction among the aluminum coating layer 14, the intermetallic compound layer 16, and the base steel sheet 12 at the time of measuring the thickness is determined according to the above-described determination criteria.

[End portion of steel sheet]

The steel sheet 100 of the present disclosure has the exposed portions 22 in which the base steel sheet 12 is exposed on both surfaces of the end portion of the steel sheet 100. The exposed portion 22 is present on at least a part of the end portion. In addition, the steel sheet 100 of the present disclosure has the coated portion 26 on a side closer to the center portion of the steel sheet 100 than to the exposed portion 22. The coated portion 26 has a structure similar to the structure in a region other than the end portion.

(Exposed Portion)

The exposed portion 22 is formed on both surfaces of the end portion of the steel sheet 100 to be welded and formed along the end edge of the steel sheet 100. That is, the exposed portion 22 is formed in a range from the end edge of the steel sheet 100 to the boundary between the exposed portion 22 and the coated portion 26 in the end portion to be welded. Here, taking Figs. 2 and 6 as an example, the exposed portion 22 is formed in a range from the end surface 100A to the boundary 100B of the steel sheet 100. In the case of Figs. 2 and 6, the width of this exposed portion 22 is W.

The exposed portion 22 formed on at least both surfaces of the end portion of the steel sheet 100 may be formed such that after the end portions of the steel sheet 100 to be welded are butt-welded, the aluminum coating layer 14 and the intermetallic compound layer 16 do not remain at the boundary between the weld metal portion formed in the joint and the steel sheet 100. In order to be in this state, the exposed portion 22 is provided on at least a part of both surfaces of the end portion of the steel sheet 100 along the end edge of the steel sheet 100.

The width of the exposed portion 22 may satisfy the relationship (the maximum width of the weld metal portion × 1.2)/2 to (the maximum width of the weld metal portion × 4)/2 in terms of the fatigue strength and the corrosion resistance after painting of the joint when formed into a butt-welded member and a hot stamped product. The fatigue strength and the corrosion resistance after painting of the joint depend on the maximum width of the molten metal. For the maximum width of the weld metal portion, the width of a surface having a larger width of a front surface (first surface) and a back surface (second surface) may be employed. Also, the maximum width of the weld metal portion in each of the front surface and the back surface may satisfy the relationship of the expression described above.

By setting the upper limit of the width of the exposed portion 22 to the above range, when formed into a butt-welded member and a hot stamped product, deterioration in the fatigue strength of the joint is easily suppressed. Also, when formed into a hot stamped product, deterioration in the corrosion resistance after painting of the welded portion is easily suppressed. Moreover, when formed into a hot stamped product, the range in which scale is formed is not too wide and thus damage of the press mold is easily suppressed. On the other hand, by setting the lower limit of the width of the exposed portion 22 to the above range, melting of the aluminum coating layer 14 and the intermetallic compound layer 16 due to laser for butt welding during butt welding is prevented. Therefore, mixing of an aluminum component in the weld metal portion is suppressed, and thus fracture of the molten metal is easily suppressed.

In light of the above, the width of the exposed portion 22 in the first direction F1 may be 0.1 mm or more on average. The width of the exposed portion 22 is more preferably 0.2 mm or more. By setting the width of the exposed portion 22 to 0.1 mm or more, it is possible to prevent aluminum from remaining in the end portion of the weld metal portion during welding of the tailored blank. The width of the exposed portion 22 may be 5.0 mm or less. By setting the width of the exposed portion 22 to 5.0 mm or less, deterioration in corrosion resistance after painting can be suppressed. In a case where butt welding is laser welding, the width of the exposed portion 22 is preferably 0.5 mm or more and the width of the exposed portion 22 is 1.5 mm or less. In a case where butt welding is plasma welding, the width of the exposed portion 22 is preferably 1.0 mm or more and the width of the exposed portion 22 is preferably 4.0 mm or less.

Here, with reference to Fig. 2, the width of the exposed portion 22 is the distance from the end edge of the end surface 100A of the steel sheet 100 to the boundary 100B between the exposed portion 22 and the coated portion 26 and is represented by W. The width of the exposed portion 22 can be obtained by, for example, measuring the width of the exposed portion 22 with a microscope using scale from cross sections of five places where the entire length of the exposed portion 22 in the third direction (X direction) is divided into five equal parts, and obtaining the average value thereof.

The range of the depth D is not particularly limited as long as the depth is such that the aluminum coating layer 14 and the intermetallic compound layer 16 are removed and the base steel sheet 12 can be exposed. That is, the range of the depth D may be equal to or more than the total thickness of the aluminum coating layer 14 and the intermetallic compound layer 16. However, from the viewpoint of static strength (joint static strength) and fatigue strength, the range of the depth D is equal to or more than the total thickness of the aluminum coating layer 14 and the intermetallic compound layer 16 and is preferably as small as possible. The depth D may be equal to the total thickness of the aluminum coating layer 14 and the intermetallic compound layer 16. In this case, the shape of the end portion of the coated portion 26 which is located on the end edge side of the steel sheet 100 and on an inner side of the base steel sheet 12 may be a recessed curve represented by a curvature radius R2.

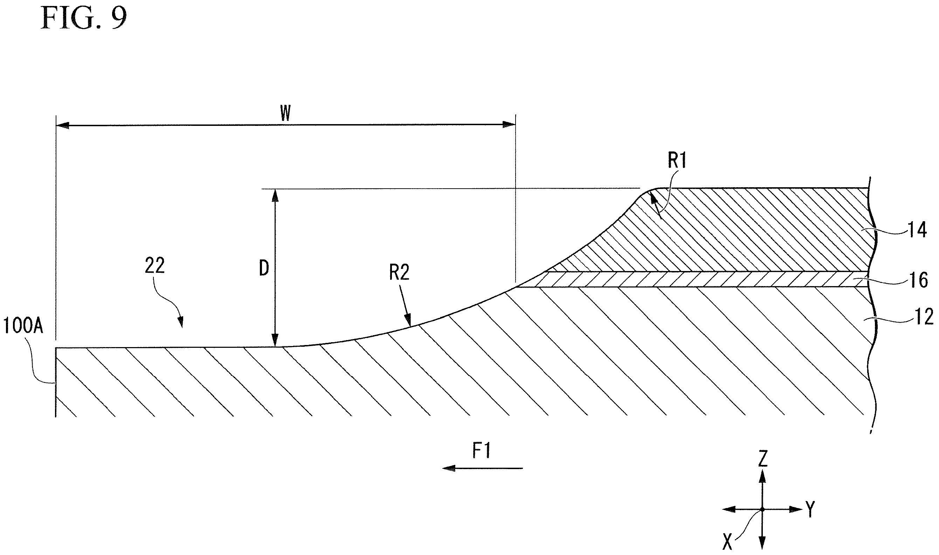

In addition, as shown in Fig.9, in the exposed portion 22 provided on both surfaces of the end portion of the steel sheet 100, the relationship between the depth D and the above-described curvature radius R1 and R2 may satisfy the following Expression (3). By satisfying this relationship, the fatigue strength of the joint is further improved. In addition, the static strength is further improved. Note that the relationship $D \leq (R1 + R2)$ of the depth D($\mu$m) and the curvature radius R1 ($\mu$m) and the curvature radius R2 ($\mu$m) represents the relationship in one surface of the exposed portion, and both surfaces may satisfy this relationship.

$$\text{Expression (3): } D \leq (R1 + R2)$$

Specifically, the depth D may be (the thickness of the base steel sheet 12 $\times$ 0.15)/2 or less and may be (the thickness of the base steel sheet 12 $\times$ 0.1)/2 or less in consideration of the static strength and the fatigue strength of the joint.

The following methods may be used as a method of measuring the depth D and the width (removal width W) of the exposed portion 22 from a tailored blank and a hot-stamping formed product.

In the tailored blank and the hot-stamping formed product, the depth D can be obtained by, for example, cutting the steel sheet 100 having the exposed portion 22 adjacent to the weld metal portion in the sheet thickness direction and observing the cut cross section with an optical microscope. In the cut cross section, the thickness of the base steel sheet 12 in the exposed portion 22 adjacent to the weld metal portion and the total thickness of the aluminum coating layer 14, the intermetallic compound layer 16, and a region other than the end portion of the base steel sheet 12 may be measured.

Specifically, first, in the region other than the end portion, the thickness of the base steel sheet 12, and the total thickness (thickness A) of the aluminum coating layer 14 and the intermetallic compound layer 16 formed on the base steel sheet 12 are obtained. The thickness A is the average value of values obtained at the positions of five places where the sheet width in the region other than the end portion is divided into five equal parts.

Next, the thickness (thickness B) of the base steel sheet 12 in a portion excluding the exposed portion 22, located at the boundary between the exposed portion 22 and the coated portion 26 is determined. The thickness B is the average value obtained by measuring a range from the end point on the base steel sheet 12 side at the boundary between the exposed portion 22 and the coated portion 26 (end of the exposed portion 22 on the coated portion 26 side) to the end point of the exposed portion 22 of the steel sheet 100 on the end edge side. However, a range of 10% of the entire width of this range from the end point of the exposed portion 22 on the end edge side of the steel sheet 100 to the center portion and a range of 10% from the end point on the base steel sheet 12 side at the boundary between the exposed portion 22 and the coated portion 26 to the end edge side of the steel sheet 100 are excluded from the measurement. In the excluded region, measurement is performed at the positions of five places divided into five equal parts, and the average value thereof is used as the thickness B.

Then, the depth D is obtained by subtracting the thickness B from the thickness A obtained above (that is, the depth D is determined from the following Expression:

$$\text{depth D} = \text{thickness A} - \text{thickness B}).$$

Note that the depth D1 and D2 which will be described later may be similarly measured.

Further, measurement of the width of the exposed portion 22 may be performed by observing the exposed portion 22 by with an optical microscope. The specific measurement method of the width of the exposed portion 22 is as follows.

First, samples for measurement including a cross section in which the entire width of the exposed portion 22 in the end portion of the steel sheet 100 can be observed are collected at five places. Next, the steel sheet 100 is cut so as to expose the cross section thereof and then embedded in a resin and polished, and the cross section is magnified with an optical microscope. The distance from the end edge of the steel sheet 100 to the coated portion 26 (width of the exposed portion 22) is measured by using the end edge of the steel sheet 100 as a reference. The average value of the measurements at five places is determined as the width of the exposed portion 22.

(Boundary between Exposed Portion and Coated Portion)

For the cross-sectional shape of the boundary between the exposed portion 22 and the coated portion 26, there is a coated portion 26 formed with a protruded curve represented by a curvature radius R1 on the outer surface side of the steel sheet 100 of the boundary when the boundary between the exposed portion 22 and the coated portion 26 is viewed from the cross section. That is, the shape of the end portion of the coated portion 26 which is located on the end surface 100A side of the steel sheet 100 and on the outer portion side from the inner side of the base steel sheet 12 toward the surface of the base steel sheet 12 is a curve represented by the curvature radius R1 protruding toward the first direction F1 side. Also, an exposed portion formed with a recessed curve represented by a curvature radius R2 may be provided on the other end side of the boundary. That is, the shape of the end portion of the exposed portion 22 on the coated portion 26 side may be a recessed curve represented by the curvature radius R2. The coated portion 26 formed with the protruded curve is the aluminum coating layer 14. Then, the curvature radius R1 satisfies the relationship of $5~\mu\text{m} \leq \text{R1}$. Also, the curvature radius R2 satisfies the relationship of $260 \leq \text{R2}$.

A larger R1 results in good adhesion of the painted film in terms of the corrosion resistance after painting. For this reason, R1 may satisfy $10~\mu\text{m} \leq \text{R1}$, $15~\mu\text{m} \leq \text{R1}$, or $20~\mu\text{m} \leq \text{R1}$. Note that the upper limit of R1 is not particularly limited. From the viewpoint of the corrosion resistance after painting, the removal width (exposed width) of the aluminum coating layer 14 and the intermetallic compound layer 16 is preferably small, and thus R1 is preferably $500~\mu\text{m}$ or less ($\text{R1} \leq 500~\mu\text{m}$).

In addition, in terms of the fatigue strength of the joint, a larger R2 results in relaxing of stress concentration when a stress load is applied. For this reason, R2 may satisfy $260~\mu\text{m} \leq \text{R2}$, $400~\mu\text{m} \leq \text{R2}$, or $1000~\mu\text{m} \leq \text{R2}$. Note that the upper limit of R2 is not particularly limited, and for example, $\text{R2} \leq 100000~\mu\text{m}$ is exemplified.

Here, as a method of measuring R1 and R2 at the boundary between the exposed portion 22 and the coated portion 26 from a steel sheet, a tailored blank, a hot-stamping formed product or the like, measurement may be performed with an optical microscope by a method similar to the above-described measurement method for the width of the exposed portion 22. R1 measured from the cross-sectional image is determined as the minimum value (excluding 0) among the curvature radii measured in the waviness curve of the end portion of the coated portion 26. R2 measured from the cross-sectional image is determined as the minimum value (excluding 0) among the curvature radii measured in the waviness curve of the end portion of the exposed portion 22. R1 and R2 are each determined as the average value of the values of R1 and the values of R2 obtained from the cross sections at five positions where the entire length of the exposed portion 22 in the longitudinal direction is divided into five parts.

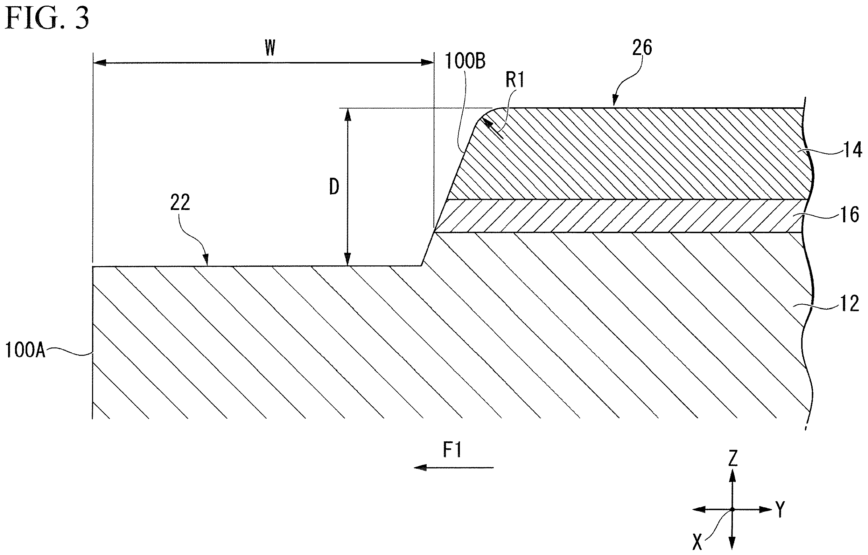

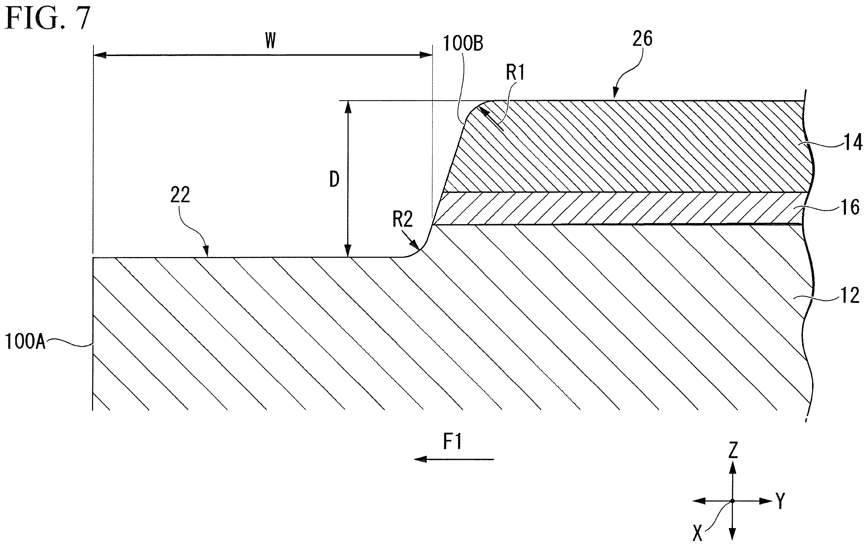

In the boundary between the exposed portion 22 and the coated portion 26, the center portion and the end portion on the base steel sheet 12 side of the boundary may extend in a direction along the sheet thickness direction (refer to Figs. 1, 2, 5, and 6). In addition, the center portion and the end portion on the base steel sheet 12 side of the boundary may be inclined with respect to the sheet thickness direction (for example, the base steel sheet 12 side of the boundary is inclined to the end edge side of the steel sheet 100 rather than the outer surface side of the steel sheet 100) as long as R1 satisfies the above-described condition (refer to Figs. 3 and 7). In the case of being inclined, R2 may satisfy the condition of Expression (2).

With reference to Figs. 3 and 7, the width W of the exposed portion 22 in a case where the center portion of the boundary is inclined will be described. Figs. 3 and 7 are enlarged cross-sectional views showing another example of an end portion of the steel sheet 100 of the present disclosure. As shown in Figs. 3 and 7, the boundary 100B between the exposed portion 22 and the coated portion 26 is inclined to the end edge side of the steel sheet 100. Then, as shown in Figs. 3 and 7, the width W of the exposed portion 22 is represented by the distance from the end edge of the end surface 100A of the steel sheet 100 to the base steel sheet 12 on the intermetallic compound layer 16 side at the boundary 100B between the exposed portion 22 and the coated portion 26.

Here, in the steel sheet 100 of the present disclosure, the exposed portion 22 of the base steel sheet 12 is formed in an end portion of the welding scheduled portion. A non-exposed portion in which at least the intermetallic compound layer 16 remains may be formed in a region including the end edge of the steel sheet 100 as long as fracture does not occur in the weld metal portion when formed into a tailored blank and a hot-stamping formed product.

For example, when the steel sheet 100 is punched to obtain a punched member, in a region including the end edge of the steel sheet 100 in the end portions of the steel sheet 100, droop may occur due to a cutting unit such as a shear in some cases. In the steel sheet 100 in which droop has occurred, for example, when the intermetallic compound layer 16 and the aluminum coating layer 14 are removed in the end portion of the steel sheet 100 by cutting or the like, at least the intermetallic compound layer 16 remains in a portion where droop occurs in some cases. The portion in which at least the intermetallic compound layer 16 remains becomes the non-exposed portion. Then, the presence of this non-exposed portion is acceptable as long as fracture does not occur in the weld metal portion when formed into a tailored blank and a hot-stamping formed product.

The concentration of aluminum (A1 concentration) contained in the weld metal portion when formed into a tailored blank and a hot-stamping formed product may be 0.065 mass% to 1 mass% or less (preferably 0.8 mass% or less). Within this range, fracture of the weld metal portion in a tailored blank and a hot-stamping formed product is easily suppressed.

The concentration of aluminum in the weld metal portion is an average concentration. The concentration of aluminum in the weld metal portion is measured as follows.

Cutting is performed in a direction orthogonal to a laser weld line, and the cut sheet is embedded in a resin and polished. Then, mapping analysis is performed from the surface of the steel sheet 100 to the base steel sheet 12 by an electron beam microanalyser (FE-EPMA) to measure the concentration of aluminum. The measurement conditions are an acceleration voltage of 15 kV, a beam diameter of about 100 nm, an irradiation time of 1000 ms, and a measurement pitch of 5 $\mu$m in a lattice shape. The measurement values of the concentration of aluminum of the weld metal portion are averaged to obtain the average concentration.

Next, examples of a preferable method of manufacturing the steel sheet 100 of the present disclosure will be described in detail. The formation of the exposed portion 22 is not particularly limited, and either of laser processing or machine processing may be employed. An example of a preferable method of manufacturing the steel sheet 100 of the present disclosure includes a step of forming the exposed portion 22 by cutting. An example of a more preferable manufacturing method includes a step of forming the exposed portion 22 by cutting by machine processing. An example of an even more preferable manufacturing method includes a step of forming the exposed portion 22 by cutting with an end mill. The end mill facilitates production of the shape of the steel sheet 100 of the present disclosure by appropriately controlling the R shape on the end portion of the tool.

Hereinafter, an example of a preferable method of forming the exposed portion 22 will be specifically described.

As an example of a preferable method of forming the exposed portion 22 in at least a part of both surfaces of the end portion of the steel sheet 100, for example, the following method may be used.

The method may include a step of, in at least a part of the end portion of the steel sheet 100, removing the intermetallic compound layers 16 and the aluminum coating layers 14 formed on both surfaces of the base steel sheet 12 by cutting to form the exposed portion 22 in which the base steel sheet 12 is exposed (referred to as formation method A).

For example, the formation method A is a method of forming the exposed portion 22 in the end portion of the steel sheet 100 as described below. First, as a steel sheet before a tailored blank is formed, a steel sheet cut into a desired size is prepared. Next, the aluminum coating layers 14 and the intermetallic compound layers 16 formed on both surfaces of the base steel sheet 12 are removed by cutting in at least a part of the end portion of the cut steel sheet. Then, the exposed portion 22 in which the base steel sheet 12 is exposed is formed in the end portion of the steel sheet 100.

A removal method by cutting performed to form the exposed portion 22 is not particularly limited. Examples of the cutting method include methods performed by machining such as polishing, a bite, a slice machine, an end mill, or a metal saw. Further, by combining these methods, the intermetallic compound layer 16 and the aluminum coating layer 14 may be removed to form the exposed portion 22.

Another method other than machining is a method of removing by laser processing such as laser gouging. However, in a case where the exposed portion 22 is formed by laser processing such as laser gouging, when heat is applied, hydrogen may be mixed into the base steel sheet 12 in the portion in which the exposed portion 22 is formed due to water vapor in the atmosphere. In addition, since the base steel sheet 12 in the portion in which the exposed portion 22 is formed is rapidly cooled after laser processing, martensite is formed as the metallographic structure of the base steel sheet 12 in this portion. Thus, delayed fracture may occur at the end surface of the steel sheet before welding in some cases.

On the other hand, in a case where the exposed portion 22 is formed by machining, in the base steel sheet 12 in the portion in which the exposed portion 22 is formed, the temperature rise is suppressed and martensite is not formed. In addition, the formation of delayed fracture is suppressed since hydrogen does not enter. From this point, as a method of forming the exposed portion 22, it is preferable to employ cutting by machining.

Further, in a case where the exposed portion 22 is formed by machining, there is no need to incorporate a light-shielding measure against laser light when performing laser processing such as laser gouging, and thus this is advantageous in terms of cost or the like.

Also, as a method of forming R1 and R2 at the boundary between the exposed portion 22 and the coated portion 26, formation may be performed by the above-described machining. In the case of forming by machining, formation may be performed by using, for example, an end mill (a tip blade of an end mill, a side blade of an end mill), a metal saw, or the like.

Among the machining processes, the exposed portion 22 is preferably formed by cutting with an end mill. Cutting with an end mill is cutting by rotational movement. Therefore, in the exposed portion 22 formed by the end mill, a cut mark having a fine uneven shape is generated on the cutting surface (the exposed surface of the base steel sheet 12 in the exposed portion 22 and the cross section of the coated portion 26 at the boundary between the exposed portion 22 and the coated portion 26).

When the exposed portions 22 are formed on at least a part of both surfaces of the end portion of the steel sheet 100, the order of forming the exposed portions 22 in the end portion is not limited to the above formation method A. The exposed portion 22 may be provided in an end portion to be welded.

As an example of another preferable method of forming the exposed portion 22 in at least a part of both surfaces of the end portion of the steel sheet 100, for example, the following method may be used.

The method may include a step of removing the aluminum coating layers 14 and the intermetallic compound layers 16 formed on both surfaces of the base steel sheet 12 in at least a part of a region other than the end portion of the steel sheet 100 by cutting to form the exposed portion 22 in which the base steel sheet 12 is exposed, and a step of cutting the steel sheet 100 such that a portion in which the base steel sheet 12 is exposed is provided in the end portion of the steel sheet 100 to form the exposed portion 22, in which the base steel sheet 12 is exposed, on both surfaces of the steel sheet 100 in at least a part of the end portion of the steel sheet 100 (referred to as formation method B).

For example, the formation method B is specifically the following method. First, a steel sheet 100 which is punched and cut into a desired size is prepared. Next, on the cut steel sheet 100, an exposed portion 22 in which the base steel sheet 12 is exposed is formed by removing the aluminum coating layer 14 and the intermetallic compound layer 16 formed on the base steel sheet 12 by cutting. The exposed portion 22 is formed in regions other than the end portion of the steel sheet 100 so as to extend in one direction, for example. Then, in the steel sheet 100 after cutting, a portion in which the base steel sheet 12 is exposed is cut such that the exposed portion 22 is along the end edge of the steel sheet 100. The steel sheet 100 obtained by cutting is a steel sheet 100 before a tailored blank is formed.

In the case of the formation method B, the width of the exposed portion 22 formed by removing the aluminum coating layer 14 and the intermetallic compound layer 16 may be 0.4 mm to 30 mm and is preferably 0.4 mm to 10 mm. For a position at which the exposed portion 22 is cut, cutting may be performed at a position near the center line of the exposed portion 22 to be a desired width.

The width of the exposed portion 22 of the base steel sheet 12 formed by the above formation method A may be 10% to 50% larger than half of the width of a melted region (weld metal portion) after butt welding of the steel sheet 100.

The width of the exposed portion 22 of the base steel sheet 12 of the steel sheet 100 formed by the above formation method B before cutting may be 10% to 50% larger than half of the width of a melted region (weld metal portion) after butt welding of the steel sheet 100.

Within these ranges, since mixing of aluminum in the weld metal portion after butt welding of the steel sheet 100 is suppressed, excellent corrosion resistance after painting of the welded portion is obtained and deterioration in tensile strength is also suppressed. In addition, since there is no hard and brittle intermetallic compound layer 16 at the boundary between the weld metal portion and the coated portion 26, deterioration in the fatigue strength of the steel sheet 100 after hot stamping is suppressed.

<Tailored Blank>

Next, the butt-welded member (tailored blank) will be described.

The butt-welded member (tailored blank) is a tailored blank which has at least one steel sheet 100 of the present disclosure and in which at least two steel sheets are butt-welded through end portions having the exposed portion 22 of the steel sheet 100 of the present disclosure. When the butt-welded member has at least one steel sheet 100 of the present disclosure, welding may be performed in a state in which the end surfaces of two steel sheets may be butted together or welding may be performed in a state in which the end surfaces of three steel sheets may be butted together. For example, the tailored blank may be a welded member obtained by performing welding in a state in which the end surface of the end portion of the steel sheet 100 of the present disclosure having the exposed portion 22 and the end surface of the end portion of the welding scheduled portion of another steel sheet are butted together. The other steel sheet to be butt-welded may be a zinc-based coated steel sheet (zinc, zinc-iron, zinc-nickel, or zinc-magnesium) having a tensile strength of 400 to 2700 MPa after hot pressing. It is desirable to weld the zinc-based coated steel sheet without forming the exposed portion 22.

In addition, for example, the tailored blank may be obtained by performing welding in a state in which the end surfaces of the end portions having the exposed portion 22 in two steel sheets 100 of the present disclosure are butted together or may be obtained by performing welding in a state in which the end surfaces of the end portions having the exposed portion 22 in three steel sheets 100 of the present disclosure are butted together. Further, welding may be performed in a state in which the end surfaces of the exposed portion 22 in three or more steel sheets 100 of the present disclosure are butted together.

That is, the tailored blank has at least one steel sheet 100 of the present disclosure, and the weld metal portion which joins at least two steel sheets whose end portions are disposed facing each other, joins end portions of the at least two steel sheets, and is provided adjacent to the exposed portion 22 in which the base steel sheet 12 of the steel sheet 100 of the present disclosure is exposed. For example, the exposed portion 22 specifically has both surfaces located around the weld metal portion in both surfaces of the two steel sheets joined by the weld metal portion.

Two or more steel sheets for obtaining a tailored blank may be used in combination according to the purpose. As two or more steel sheets for obtaining a tailored blank, for example, steel sheets of the same strength class may be used, or steel sheets of different strength classes may be used. In addition, as the two or more steel sheets, steel sheets having the same thickness may be used, or steel sheets having different thicknesses may be used.

Further, two or more steel sheets for obtaining a tailored blank may be steel sheets in which the widths of the exposed portions 22 of the end portions of the steel sheets are the same, or steel sheets in which the widths of the exposed portions 22 of the end portions of the steel sheets are different. The two or more steel sheets may also be steel sheets in which the embodiments of the boundary between the exposed portion 22 and the coated portion 26 of the steel sheets are the same, or steel sheets in which the embodiments of the boundary between the exposed portion 22 and the coated portion 26 of the steel sheets are different.

For example, a combination in which the embodiments of the boundary between the exposed portion 22 and the coated portion 26 of the steel sheets are different includes a combination of embodiments in which R1 provided on the outer surface side of the steel sheet at the boundary between the exposed portion 22 and the coated portion 26 is different. Also, examples of a combination of the steel sheets 100 having R1 and R2 include 1) a combination of embodiments in which R1 is different and R2 is the same; 2) a combination of embodiments in which R1 is the same and R2 is different; and 3) a combination of embodiments in which R1 is different and R2 is also different.

Further, the tailored blank may include a welded member obtained by butt-welding at least two steel sheets 100 of the present disclosure through end portions having the exposed portion 22 in terms of the fatigue strength of the joint and the corrosion resistance after painting of the welded portion. In this case, the following conditions are preferably satisfied.

Of the at least two steel sheets 100 of the present disclosure, the sheet thickness of a steel sheet 100 having a smaller product of the sheet thickness of the steel sheet 100 and the tensile strength of the steel sheet 100 after hot press forming (hereinafter sometimes referred to as steel sheet A) is assumed as t ($\mu$m). In addition, when the steel sheet A is viewed from the cross section parallel to each of a second direction F2 directed from the coated portion 26 to the weld metal portion and the thickness direction of the steel sheet, the length in the thickness direction of the steel sheet 100 from a virtual line formed by extending the surface of the aluminum coating layer 14 of the coated portion 26 in the second direction F2 to the surface of the base steel sheet 12 is assumed as the depth of the exposed portion. Of the exposed portions 22 formed on both surfaces of the end portion of the steel sheet A, the depth of the exposed portion in the vertical direction of the exposed portion 22 formed on one surface (first surface) is assumed as D1 (hereinafter sometimes referred to as "removal depth D1"), and the depth of the exposed portion in the vertical direction of the exposed portion 22 formed on the other surface (second surface) is assumed as D2 (hereinafter sometimes referred to as "removal depth D2"). At this time, the relationship between t ($\mu$m), D1 ($\mu$m), and D2 ($\mu$m) may satisfy the following relationship of Expression (4). In a case where the following Expression (4) is satisfied, the fatigue strength is improved. Note that the unit of the sheet thickness is normally represented by mm, but the numerical value substituted in t is substituted as a value converted into $\mu$m.

$$\text{Expression (4): } ((D1 + D2)/t) \times 100 \leq 20$$

D1 and D2 are determined by the same measurement method as the above-described depth D (that is, in the depth in the vertical direction from the virtual line formed by extending the surface of the aluminum coating layer 14 in the direction of the exposed portion 22 to the surface of the base steel sheet 12, the depth to a portion excluding the exposed portion 22 at the boundary between the exposed portion 22 and the coated portion 26).

In addition, in the "product of the sheet thickness of the steel sheet and the tensile strength of the steel sheet after hot press forming", the sheet thickness of the steel sheet after hot press forming is used for the sheet thickness, and the tensile strength after hot press forming is used for the tensile strength.

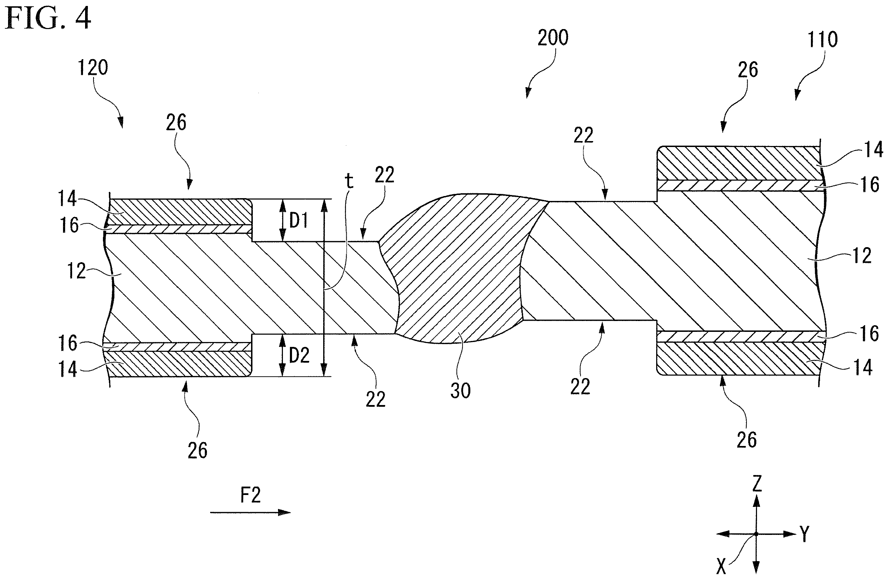

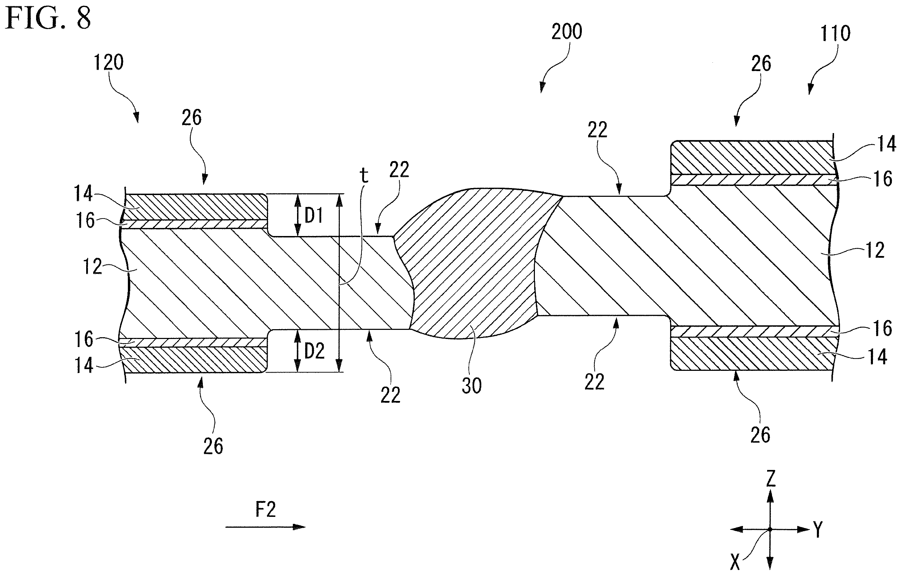

Here, with reference to Figs. 4 and 8, the sheet thickness t, the depth D1, and the depth D2 in a tailored blank will be described. Fig. 4 is a cross-sectional view showing an example of the tailored blank of the present disclosure. The tailored blank 200 shown in Fig. 4 is formed by butt-welding end portions of welding scheduled portions of a steel sheet 110 and a steel sheet 120. The tailored blank 200 has the steel sheet 110 and the steel sheet 120 joined through the weld metal portion 30, the exposed portion 22 adjacent to the weld metal portion 30, and the coated portion 26 adjacent to a side of the exposed portion 22 apart from the weld metal portion 30.

As shown in Figs. 4 and 8, the sheet thickness of the steel sheet 120 is smaller than the sheet thickness of the steel sheet 110. The steel sheet 110 and the steel sheet 120 may have the same steel sheet tensile strength after hot press forming. Accordingly, in the tailored blank 200 shown in Figs. 4 and 8, the steel sheet 120 has a smaller product of the tensile strength and the sheet thickness of the steel sheet after hot press forming than the steel sheet 110. Therefore, in Figs. 4 and 8, the sheet thickness t, the depth D1, and the depth D2 are values of the steel sheet 120. The sheet thickness t is the sheet thickness of the steel sheet 120. The depth D1 is the distance between a virtual line formed by extending the surface of the aluminum coating layer 14 on one surface in the direction of the exposed portion 22 (second direction F2) and the surface of the base steel sheet 12. The depth D2 is the distance between a virtual line formed by extending the surface of the aluminum coating layer 14 on the other surface in the direction of the exposed portion 22 (second direction F2) and the surface of the base steel sheet 12.

In a case where the depth D is too large, the load durability of the joint is easily deteriorated. Incidentally, the load durability is represented by the product of the sheet thickness and the strength of the base steel sheet 12 before performing aluminum coating treatment. Accordingly, the load durability of the joint depends on a steel sheet having a smaller load durability of two steel sheets when forming the tailored blank 200. For this reason, the relationship between t, D1, and D2 may satisfy the above-described relationship. The relationship between t, D1, and D2 may be $((D1 + D2)/t) \times 100 \leq 10$ or $((D1 + D2)/t) \times 100 \leq 7$.

The welding method for performing butt welding is not particularly limited, and examples thereof include welding methods such as laser welding (laser beam welding), arc welding, and electron beam welding. Examples of arc welding include plasma welding, TIG (Tungsten Inert Gas) welding, MIG (Metal Inert Gas) welding, MAG (Metal Active Gas) welding, and the like, and suitable arc welding includes plasma welding. The welding conditions may be selected depending on the desired conditions such as the thickness of the steel sheet to be used.

In addition, if required, welding may be performed while a filler wire is being supplied.

In the tailored blank 200, butt welding is performed in a state in which the end surfaces of the end portions having the exposed portion 22 are butted together as described above. Therefore, in the weld metal portion 30, the amount of mixed aluminum derived from the intermetallic compound layer 16 and the aluminum coating layer 14 is small. In addition, since the exposed portion 22 in which the intermetallic compound layer 16 is not present is adjacent to the weld metal portion 30, deterioration in the fatigue strength of the tailored blank 200 and the joint after hot stamping is suppressed. In addition, deterioration in the tensile strength of the joint is suppressed.

<Hot Stamped Product>

Next, the hot stamped product will be described.

The hot stamped product (hot-stamping formed product) is a formed product obtained by hot press forming the tailored blank 200 having at least one steel sheet 100 of the present disclosure. That is, the hot stamped product obtained by hot press forming has at least one steel sheet 100 of the present disclosure, and the weld metal portion 30 which joins at least two steel sheets whose end portions are disposed facing each other, joins end portions of the at least two steel sheets, and is provided adjacent to the exposed portion 22 in which the base steel sheet 12 of the steel sheet 100 of the present disclosure is exposed. For example, the exposed portion 22 specifically has both surfaces located around the weld metal portion 30 in both surfaces of the two steel sheets joined by the weld metal portion 30.

The hot-stamping formed product may be a formed product obtained by hot press forming a welded member obtained by butt-welding at least two steel sheets of the present disclosure through end portions having the exposed portion 22 in terms of the fatigue strength of the joint and the corrosion resistance after painting of the welded portion.

The hot-stamping formed product can be manufactured as follows.

First, a tailored blank 200 is heated to a high temperature to soften the tailored blank 200. Then, the softened tailored blank 200 is formed by hot stamping using a die, cooled and quenched to obtain a hot-stamping formed product having a desired shape. In a hot-stamping formed product, for example, a formed product having a high tensile strength of about 1500 MPa or more can be obtained by heating and quenching by cooling.

As a heating method at the time of hot stamping, it is possible to adopt a heating method by infrared heating, energization heating, induction heating or the like in addition to a normal electric furnace or radiant tube furnace.

In the hot-stamping formed product, during heating, the aluminum coating layer 14 of the steel sheet 100 is changed to an intermetallic compound that protects oxidation of the steel sheet 100. For example, as an example, in a case where the aluminum coating layer 14 contains silicon (Si), when the aluminum coating layer 14 is heated, the A1 phase is changed into an intermetallic compound, that is, an Al-Fe alloy phase or an Al-Fe-Si alloy phase due to mutual diffusion with Fe. The melting points of the Al-Fe alloy phase and the Al-Fe-Si alloy phase are high and are 1000°C or higher. There are a plurality of kinds of Al-Fe phases and Al-Fe-Si phases, and when heated at a high temperature or for a long period of time, the Al phase is changed to an alloy phase having a higher Fe concentration. These intermetallic compounds prevent oxidation of the steel sheet 100.

The maximum attainment temperature when hot stamping is performed is not particularly limited, and for example, the maximum attainment temperature is preferably 850°C to 1000°C. In the hot stamping forming, since heating is performed in an austenite region, typically, a temperature of 900°C to 950°C is often adopted as the maximum attainment temperature.

In the hot stamping, the tailored blank 200 heated to a high temperature is press-formed with a die cooled by water cooling or the like, and simultaneously quenched by cooling with the die. In addition, if required, water cooling may be performed by spraying water directly to the blank material from the gap of the die. Thus, a hot-stamping formed product having a desired shape is obtained. The hot-stamping formed product may be used as it is, or may be used after performing descaling treatment by shot blasting, brushing, laser cleaning, or the like on the welded portion, if required.

When the tailored blank 200 is heated to a high temperature, the metallographic structure of the base steel sheet 12 is at least partially, preferably entirely, formed of an austenite single-phase structure. Thereafter, at the time of press forming with a die, the austenite is transformed into martensite or bainite or a combination thereof by cooling under desired cooling conditions. In the hot-stamping formed product thus obtained, the metallographic structure of the base steel sheet 12 is any metallographic structure of martensite, bainite or martensite-bainite.

Here, an example of a step from producing the steel sheet 100 to producing the hot-stamping formed product is as follows.

First, the aluminum coating layers 14 are formed on both surfaces of the base steel sheet 12 to obtain a steel sheet. At this time, the intermetallic compound layer 16 is formed between the base steel sheet 12 and the aluminum coating layer 14.

Next, the steel sheet in which aluminum coating has been applied to both surfaces of the base steel sheet 12 is wound in a coil shape. Then, the steel sheet wound in a coil shape is drawn out and punched to obtain a punched member.

Then, the aluminum coating layers 14 and the intermetallic compound layers 16 of both surfaces of the steel sheet 100 are removed in at least a part of the end portion of the steel sheet to form the exposed portion 22 of the base steel sheet 12, thus obtaining the steel sheet 100 of the present disclosure.

Here, the exposed portion 22 formed on the end portion of the steel sheet 100 may be formed in a state in which the steel sheet wound in a coil shape is drawn out after the steel sheet is wound in a coil shape. In this case, after the exposed portion 22 is formed, punching is performed such that the exposed portion 22 is provided in the end portion of the steel sheet 100 to obtain a punched member.

In addition, the exposed portion 22 formed in the end portion of the steel sheet 100 may be formed after a punched member is formed by drawing out the steel sheet wound in a coil shape and punching the drawn-out steel sheet. In this case, the exposed portion 22 may be formed in the end portion of the punched member. Also, for example, an exposed region is formed in a portion other than the end portion of the punched member to extend in one direction and then the exposed region of the punched member may be cut to form the exposed portion 22 in the end portion of the steel sheet 100.

Next, at least one punched member in which the exposed portion 22 is formed in the end portion of the steel sheet 100 is prepared. For example, one or two punched members in which the exposed portion 22 is formed may be prepared.

Next, butt welding is performed in a state in which the end portions of the punched members are butted to obtain a tailored blank. Specifically, in a case where two punched members in which the exposed portion 22 is formed are prepared, butt welding is performed in a state in which the end portions having the exposed portion 22 are butted to obtain a tailored blank 200.

Next, the tailored blank 200 is heated in a heating furnace.

Next, using a pair of die including an upper die and a lower die, the heated tailored blank 200 is pressed, formed, and quenched.

Then, the resulting formed product is released from the die to obtain a desired hot-stamping formed product.

For example, the hot-stamping formed product is useful for application to various members of industrial machines in addition to various vehicle members such as a vehicle body.

<Steel Pipe>

Next, the steel pipe will be described.

The steel pipe is formed by performing welding through the end portions of an open tube of the steel sheet 100 of the present disclosure. That is, the steel pipe is a steel pipe obtained by forming the steel sheet 100 of the present disclosure into an open tube and performing welding in a state in which the end surfaces of the end portions having the exposed portion 22 are butted together. That is, the steel pipe has at least one weld metal portion (that is, the weld metal portion for joining end portions of the open tube of the steel sheet), and has the exposed portion 22 in which the base steel sheet 12 is exposed on both surfaces of the tubular body of the steel sheet 100 of the present disclosure adjacent to the weld metal portion.

For example, a steel pipe obtained as follows is exemplified.

1) One steel sheet 100 in which a first exposed portion 22 is provided in a first end portion and a second exposed portion 22 is provided in a second end portion is prepared. This one steel sheet 100 is formed into a tubular shape to form an open tube. The steel pipe may be a steel pipe obtained by performing welding in the obtained open tube in a state in which the end surface of the end portion including the first exposed portion 22 and the end surface of the end portion including the second exposed portion 22 are butted.

2) Two or more steel sheets 100 in which a first exposed portion 22 is provided in a first end portion and a second exposed portion 22 is provided in a second end portion are prepared. In a case of two steel sheets 100, in a state in which the end surface of the end portion of the first steel sheet 100 including the first exposed portion 22 and the end surface of the second steel sheet 100 of the end portion including the second exposed portion 22 are butted together, welding is performed to prepare a tailored blank 200. Then, this tailored blank 200 is formed into a tubular shape to form an open tube. The steel pipe may be a steel pipe obtained by performing welding in the obtained open tube in a state in which the end surface of the end portion of the first steel sheet 100 portion including the second exposed portion 22 which is not welded and the end surface of the end portion of the second steel sheet 100 portion including the first exposed portion 22 which is not welded are butted together. Note that the open tube may be formed in a direction parallel to the weld line in the tailored blank 200 before forming the open tube or formed in a direction intersecting the welding line.

In a case where the steel pipe is formed of a tailored blank 200, two or more steel sheets forming a tailored blank 200 for forming the steel pipe are not limited to the above steel sheets and may be used in combination according to the purpose. Examples of the combination of two or more steel sheets include the same as the combinations of the steel sheets described in the steel sheet for forming the tailored blank 200 described above.

The method of forming into a tubular shape is not particularly limited, and any method such as a UOE method or a bending roll method may be used.

In addition, the welding after being formed into a tubular shape is not particularly limited, and examples thereof include laser welding, plasma welding, and electric resistance welding in which welding is performed by electric resistance welding or high-frequency induction heating welding.

<Hollow Hot Stamped Product>

Next, the hollow hot stamped product will be described.

The hollow hot stamped product (hereinafter sometimes referred to as "hollow hot-stamping formed product") is a hollow formed product obtained by quenching a steel pipe formed of the steel sheet 100 of the present disclosure or a tailored blank 200 obtained by butt-welding the steel sheets 100 of the present disclosure.

That is, the hollow hot stamped product obtained by hot stamping a steel pipe has at least one weld metal portion (that is, the weld metal portion obtained by joining the end portions of the steel sheet 100) and the exposed portion 22 in which the base steel sheet 12 is exposed on both surfaces of the hollow formed body with the steel sheet 100 of the present disclosure adjacent to the weld metal portion.

For example, the hollow hot stamped product is obtained as follows.

A steel pipe obtained using the steel sheet 100 of the present disclosure is formed by a bender. Next, the steel pipe is heated using a heating furnace, energization heating, or high-frequency induction heating. Since the temperature for heating the steel pipe is required to be set to an austenite region, for example, the temperature may be set to 850°C to 1100°C and may be set to about 900°C to 1000°C. Next, the heated steel pipe is cooled by water cooling or the like and quenched.

In addition, forming and quenching may be performed at the same time. This is called 3-dimensional hot bending and direct quench (3DQ) and for example, the steel pipe is heated, deformed by applying a load, and then quenched by water cooling or the like. Through these processes, a desired hollow hot stamped product is obtained. In addition, the hollow hot stamped product may be used as a part as it is. Further, the product may be used after the welded portion is descaled (for example, shot blasting, brushing, laser cleaning, or the like) if required.

The use of the hollow hot stamped product of the present disclosure is not particularly limited and examples thereof include various members of industrial machines in addition to various vehicle members such as a vehicle body. Specific examples of the vehicle member include various parts such as various pillars; reinforcers such as stabilizers, door beams, roof rails, and bumpers; frames; and arms.

[Examples]

Examples of the embodiment of the present disclosure will be illustrated below, but the present disclosure is not limited to the following examples.

It is apparent to those skilled in the art that various modification examples or revised examples can be devised within the scope of technical ideas described in claims, and it is understood that these examples also fall into the technical scope of the present disclosure as a matter of course.

<Examples>

First, a steel sheet coated with aluminum coating to have the thickness as shown in Table 2 was prepared using a base steel sheet having the chemical composition shown in Table 1 (strength class after hot stamping: 1300 to 1800 MPa) and a low-strength steel sheet (strength class after hot stamping: 590 to 980 MPa). Then, the steel sheet was cut out to form a square steel sheet having one side of 10 cm. Next, exposed portions were formed on both surfaces of the end portion of the prepared base steel sheet by cutting with an end mill.

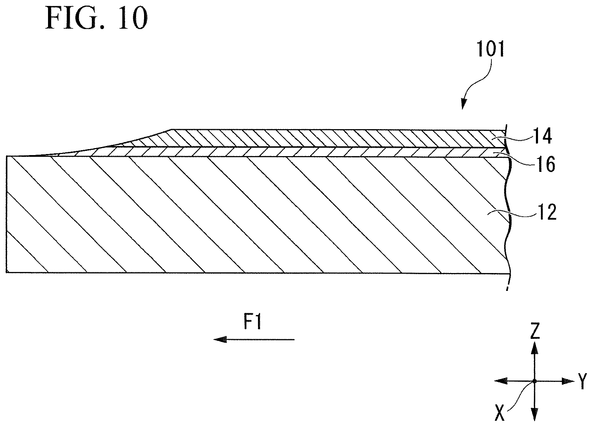

In a part of the steel sheet, an aluminum coating layer and an intermetallic compound layer 16 were not removed. In addition, in a part of the steel sheet, only the aluminum coating layer was removed and the intermetallic compound layer 16 was not removed. In the steel sheet used for No. 18, the aluminum coating layer and the intermetallic compound layer were removed so as to have the shape as shown in Fig. 10.

According to the type of the removed portion shown in Tables 4 and 5, in the exposed portion, the aluminum coating layers formed on both surfaces, or the aluminum coating layer and the intermetallic compound layer were each removed. The exposed portion was formed such that the width of the exposed portion (removal width W) was 2 mm as the average value obtained by measuring at five places as described above. Also, the exposed portion was formed to have the depth D as shown in Tables 4 and 5. Further, in the formation of the exposed portion, formation was performed such that, as the cross-sectional shape of the boundary between the exposed portion and the coated portion, the curvature radius R1 on the aluminum coating layer side and the curvature radius R2 on the base steel sheet side were values shown in Tables 4 and 5. The exposed portion was formed over an entire length of 10 cm on both surfaces of the end portion of the steel sheet on only one side of the four sides of the steel sheet.

Next, as shown in Table 3, two steel sheets described above (steel sheets 1 and 2) were prepared, the end surfaces of the end portions of the welding scheduled portions were butted in combination of the steel sheet 1 and the steel sheet 2, and butt welding was performed by laser welding to prepare a tailored blank. The welding was adjusted so as to perform penetration welding under the conditions of a laser output of 3.0 kW to 5.0 kW and a welding rate of 4.0 m/min to 7.0 m/min. Welding was performed such that the width of the weld metal portion was 2.0 mm.

The prepared tailored blank was held in a furnace heated to 920°C for 4 minutes. Then, the tailored blank was formed with a water-cooled die and quenched to manufacture a flat hot-stamping formed product.

The Vickers hardness of the weld metal portion was HV 500 or higher. In addition, in Tables 1 to 3, the strength class after HS (hot stamping) represents the strength class after hot stamping.

[Evaluation]

(Fatigue Strength Test and Joint Static Strength)

From the obtained hot-stamping formed product, a dumbbell-shaped test piece having a welded portion was collected as a test piece for a tensile strength test and a test piece for a fatigue strength test.

The test piece was collected to have a parallel portion distance of 20 mm and a parallel portion width of 15 mm and to have a weld line in the center portion of the parallel portion over the entire length so as to be orthogonal to the longitudinal direction. Using this test piece, a fatigue strength test and a joint static strength test were conducted.

The joint static strength (expressed as static strength) was calculated by dividing a load at fracture by the cross section product on the side having a smaller tensile strength × sheet thickness. The static strength ratio in Table 6 was a value obtained by multiplying, by 100, a value obtained by dividing the joint static strength obtained in the joint static strength test by the static strength of the steel sheet 2 having a lower strength of the steel sheets 1 and 2 in Table 3.

The static strength ratio was evaluated on the basis of the following determination criteria, and A and B were rated as passed, and C was rated as failed.

-Determination Criteria-

A: The static strength ratio is 100% or more.
B: The static strength ratio is 90% or more and less than 100%.
C: The static strength ratio is less than 90%.

The fatigue strength test (expressed as fatigue limit) was performed using an electromagnetic resonance type fatigue strength tester under the conditions of a load control axial force full pulsating tensile, a stress ratio of 0.1, a stress repetition number of 107, and a repetition rate of about 80 Hz in an atmosphere of room temperature. These results are shown in Table 6. The fatigue limit ratio in Table 6, the fatigue limit ratio in Table 6 is a value obtained by multiplying, by 100, a value obtained by dividing the fatigue limit obtained in the fatigue strength test by the fatigue limit of the steel sheet 2 having a lower strength of the steel sheets 1 and 2 in Table 3. The fatigue limit ratio was evaluated on the basis of the following determination criteria, and A and B were rated as passed, and C was rated as failed.

-Determination Criteria-

A: The fatigue limit ratio is 100% or more.
B: The fatigue limit ratio is 90% or more and less than 100%.
C: The fatigue limit ratio is less than 90%.

(Test for Corrosion Resistance After Painting)

After the obtained hot-stamping formed product was subjected to a chemical treatment, electrodeposition painting was performed and a test for corrosion resistance after painting was performed. The chemical treatment was performed with a chemical treatment solution PB-SX35T manufactured by Nippon Parkerizing Co., Ltd. Thereafter, as an electrodeposition painting, a cationic electrodeposition painting POWERNICS 110 manufactured by Nippon Paint Co., Ltd. was used and the electrodeposition painting was applied to have a target electrodeposition film thickness of about 15 $\mu$m. After washing with water, baking was performed by heating at 170°C for 20 minutes to prepare a test sheet. The test sheet had a size of a length of 65 mm long and a width of 100 mm (there is a welded portion at the center portion of the width).
Using this test sheet, the corrosion resistance after painting was evaluated by the corrosion state after the elapse of 360 cycles (120 days) using a vehicle component external appearance corrosion test JASO M610-92.
The evaluation of the corrosion resistance after painting was performed based on the maximum corrosion depth, and the welded portion was evaluated using a point micrometer according to the following determination criteria. A and B were rated as passed, and C was rated as failed.

-Determination Criteria-

A: The maximum corrosion depth is less than 0.1 mm.
B: The maximum corrosion depth is 0.1 mm or more and less than 0.2 mm.
C: The maximum corrosion depth is 0.2 mm or more.

The steel sheets in Tables 2 and 3 are steel sheets obtained by applying aluminum coating to both surfaces of the base steel sheet.
Further, in Tables 4 and 5, "A", "B", and "C" in the column of type of removed portion are as follows.

"A": The aluminum coating layer and the intermetallic compound layer are removed.

"B": The aluminum coating layer is removed (the intermetallic compound layer remains).

"C": The aluminum coating layer and the intermetallic compound layer remain (are not removed).

[Table 1]

| Strength class after HS of steel sheet (MPa) | Chemical composition of base steel sheet (mass%; remainder including Fe and impurities) | | | | | | | | | |
|---|---|---|---|---|---|---|---|---|---|---|
| | C | Si | Mn | P | S | Cr | Ti | Al | N | B |
| 1800 | 0.30 | 0.20 | 1.70 | 0.009 | 0.002 | 0.23 | 0.02 | 0.03 | 0.003 | 0.0016 |
| 1500 | 0.22 | 0.22 | 1.25 | 0.010 | 0.003 | 0.20 | 0.02 | 0.03 | 0.003 | 0.0015 |
| 1300 | 0.12 | 0.03 | 2.01 | 0.012 | 0.004 | 0.23 | 0.02 | 0.02 | 0.004 | 0.0018 |

[Table 2]

| Strength class after HS of steel sheet (MPa) | Thickness of aluminum coating layer ($\mu$m) | Thickness of intermetallic compound layer ($\mu$m) | Thickness of steel sheet (mm) |
|---|---|---|---|
| 1800 | 15 | 3 | 1.8 |
| 1500 | 22 | 5 | 2.0, 1.8, 1.6, 1.2 |
| 1300 | 17 | 6 | 1.6, 1.3, 1.2 |
| 980 | 18 | 6 | 1.2 |
| 780 | 20 | 5 | 1.2 |
| 590 | 17 | 5 | 1.2 |

[Table 3]

| No. | Steel sheet 1 | | | Steel sheet 2 | | |
|---|---|---|---|---|---|---|
| | Strength class after HS (S) (MPa) | Thickness (T) (mm) | (S)$\times$(T) | Strength class after HS (S) (MPa) | Thickness (T) (mm) | (S)$\times$(T) |
| 1 | 1500 | 1.8 | 2700 | 1500 | 1.2 | 1800 |
| 2 | 1800 | 1.8 | 3240 | 1500 | 1.6 | 2400 |
| 3 | 1800 | 1.8 | 3240 | 1500 | 1.6 | 2400 |
| 4 | 1800 | 1.8 | 3240 | 1300 | 1.3 | 1690 |
| 5 | 1800 | 1.8 | 3240 | 1300 | 1.3 | 1690 |
| 6 | 1800 | 1.8 | 3240 | 1300 | 1.3 | 1690 |
| 7 | 1500 | 1.6 | 2400 | 1300 | 1.2 | 1560 |
| 8 | 1500 | 2.0 | 3000 | 1300 | 1.6 | 2080 |
| 9 | 1500 | 1.8 | 2700 | 1300 | 1.2 | 1560 |
| 10 | 1800 | 1.8 | 3240 | 1300 | 1.3 | 1690 |
| 11 | 1800 | 1.8 | 3240 | 1300 | 1.2 | 1560 |
| 12 | 1800 | 1.8 | 3240 | 1300 | 1.2 | 1560 |
| 13 | 1800 | 1.8 | 3240 | 1300 | 1.2 | 1560 |
| 14 | 1800 | 1.8 | 3240 | 1300 | 1.2 | 1560 |
| 15 | 1800 | 1.8 | 3240 | 1300 | 1.2 | 1560 |
| 16 | 1800 | 1.8 | 3240 | 1300 | 1.2 | 1560 |
| 17 | 1800 | 1.8 | 3240 | 1300 | 1.2 | 1560 |

(continued)

| No. | Steel sheet 1 | | | Steel sheet 2 | | |
|---|---|---|---|---|---|---|
| | Strength class after HS (S) (MPa) | Thickness (T) (mm) | (S)×(T) | Strength class after HS (S) (MPa) | Thickness (T) (mm) | (S)×(T) |
| 18 | 1800 | 1.8 | 3240 | 1300 | 1.2 | 1560 |
| 19 | 1800 | 1.8 | 3240 | 1300 | 1.2 | 1560 |
| 20 | 1800 | 1.8 | 3240 | 980 | 1.2 | 1176 |
| 21 | 1800 | 1.8 | 3240 | 780 | 1.2 | 936 |
| 22 | 1800 | 1.8 | 3240 | 590 | 1.2 | 708 |
| 23 | 1500 | 1.8 | 2700 | 590 | 1.2 | 708 |

[Table 4]

| No. | Steel sheet (before welding) | | | | | | | | | | | | Remarks |
| | Steel sheet 1 | | | | | | | | | | | | |
| | First surface (one surface) | | | | | | Second surface (the other surface) | | | | | | |
| | Type of exposure | Width of exposed portion (mm) | Depth D (μm) | Curvature radius R1 on coated portion side (μm) | Curvature radius R2 on exposed portion side (μm) | R1 + R2 | Type of exposure | Width of exposed portion (mm) | Depth D (μm) | Curvature radius R1 on coated portion side (μm) | Curvature radius R2 on exposed portion side (μm) | R1 + R2 | |
|---|---|---|---|---|---|---|---|---|---|---|---|---|---|
| 1 | C | - | - | - | 2 | - | C | - | - | - | - | - | Comparative Example |
| 2 | B | 2 | 25 | 20 | 300 | 320 | B | 2 | 25 | 20 | 300 | 320 | |
| 3 | A | 2 | 40 | 2 | 300 | 302 | A | 2 | 40 | 2 | 300 | 302 | |
| 4 | A | 2 | 80 | 60 | 300 | 360 | A | 2 | 80 | 60 | 300 | 360 | Invention Example |
| 5 | A | 2 | 120 | 60 | 500 | 560 | A | 2 | 120 | 60 | 500 | 560 | |
| 6 | A | 2 | 150 | 60 | 1000 | 1060 | A | 2 | 150 | 60 | 1000 | 1060 | |
| 7 | A | 2 | 80 | 60 | 500 | 560 | A | 2 | 80 | 60 | 500 | 560 | |
| 8 | A | 2 | 80 | 60 | 500 | 560 | A | 2 | 80 | 60 | 500 | 560 | |
| 9 | A | 2 | 80 | 60 | 500 | 560 | A | 2 | 80 | 60 | 500 | 560 | |
| 10 | A | 2 | 150 | 60 | 1000 | 1060 | A | 2 | 90 | 60 | 1000 | 1060 | |
| 11 | A | 2 | 40 | 5 | 500 | 505 | A | 2 | 40 | 5 | 500 | 505 | |
| 12 | A | 2 | 40 | 5 | 500 | 505 | A | 2 | 40 | 20 | 500 | 520 | |
| 13 | A | 1.5 | 40 | 5 | 500 | 505 | A | 1.5 | 40 | 5 | 500 | 505 | |
| 14 | A | 1.5 | 40 | 5 | 500 | 505 | A | 1.5 | 40 | 20 | 500 | 520 | |
| 15 | A | 1.5 | 40 | 5 | 500 | 505 | A | 1.5 | 40 | 20 | 500 | 520 | |
| 16 | A | 1.5 | 40 | 20 | 0 | 20 | A | 1.5 | 40 | 20 | 0 | 20 | |
| 17 | A | 1.5 | 40 | 20 | 3 | 23 | A | 1.5 | 40 | 5 | 3 | 8 | |
| 18 | A | 1.5 | 40 | Straight line | >100000 | >100000 | A | 1.5 | 40 | Straight line | >100000 | >100000 | Comparative Example |

EP 3 812 082 A1

(continued)

| No. | Steel sheet (before welding) | | | | | | | | | | | | Remarks |
| | Steel sheet 1 | | | | | | | | | | | | |
| | First surface (one surface) | | | | | | Second surface (the other surface) | | | | | | |
| | Type of exposure | Width of exposed portion (mm) | Depth D ($\mu$m) | Curvature radius R1 on coated portion side ($\mu$m) | Curvature radius R2 on exposed portion side ($\mu$m) | R1 + R2 | Type of exposure | Width of exposed portion (mm) | Depth D ($\mu$m) | Curvature radius R1 on coated portion side ($\mu$m) | Curvature radius R2 on exposed portion side ($\mu$m) | R1 +R2 | |
|---|---|---|---|---|---|---|---|---|---|---|---|---|---|
| 19 | A | 1.5 | 40 | 20 | 350 | 370 | A | 1.5 | 40 | 5 | 350 | 355 | |
| 20 | A | 1.5 | 40 | 5 | 500 | 505 | A | 1.5 | 40 | 20 | 500 | 520 | Invention Example |
| 21 | A | 1.5 | 40 | 5 | 500 | 505 | A | 1.5 | 40 | 20 | 500 | 520 | |
| 22 | A | 1.5 | 40 | 5 | 500 | 505 | A | 1.5 | 40 | 20 | 500 | 520 | |
| 23 | A | 1.5 | 40 | 5 | 500 | 505 | A | 1.5 | 40 | 20 | 500 | 520 | |

[Table 5]

Steel sheet (before welding) — Steel sheet 2

| No. | First surface (one surface) | | | | | | Second surface (the other surface) | | | | | | Remarks |
|---|---|---|---|---|---|---|---|---|---|---|---|---|---|
| | Type of exposure | Width of exposed portion (mm) | Depth D (μm) | Curvature radius R1 on coated portion side (μm) | Curvature radius R2 on exposed portion side (μm) | R1 + R2 | Type of exposure | Width of exposed portion (mm) | Depth D (μm) | Curvature radius R1 on coated portion side (μm) | Curvature radius R2 on exposed portion side (μm) | R1 + R2 | |
| 1 | C | - | - | - | - | - | C | | | | | | Comparative Example |
| 2 | B | 2 | 25 | 60 | 300 | 360 | B | 2 | 25 | 60 | 300 | 360 | |
| 3 | A | 2 | 40 | 2 | 300 | 302 | A | 2 | 40 | 2 | 300 | 302 | Invention Example |
| 4 | A | 2 | 80 | 60 | 300 | 360 | A | 2 | 80 | 60 | 300 | 360 | |
| 5 | A | 2 | 120 | 60 | 500 | 560 | A | 2 | 120 | 60 | 500 | 560 | |
| 6 | A | 2 | 140 | 60 | 1000 | 1060 | A | 2 | 140 | 60 | 1000 | 1060 | |
| 7 | A | 2 | 80 | 60 | 500 | 560 | A | 2 | 80 | 60 | 500 | 560 | |
| 8 | A | 2 | 80 | 60 | 500 | 560 | A | 2 | 80 | 60 | 500 | 560 | |
| 9 | A | 2 | 80 | 60 | 500 | 560 | A | 2 | 80 | 60 | 500 | 560 | |
| 10 | A | 2 | 150 | 60 | 1000 | 1060 | A | 2 | 90 | 60 | 1000 | 1060 | |
| 11 | A | 2 | 40 | 20 | 500 | 520 | A | 2 | 40 | 20 | 500 | 520 | |
| 12 | A | 2 | 40 | 20 | 500 | 520 | A | 2 | 40 | 5 | 500 | 505 | |
| 13 | A | 1.5 | 40 | 5 | 500 | 505 | A | 1.5 | 40 | 5 | 500 | 505 | |
| 14 | A | 1.5 | 40 | 20 | 500 | 520 | A | 1.5 | 40 | 20 | 500 | 520 | |
| 15 | A | 1.5 | 40 | 20 | 500 | 520 | A | 1.5 | 40 | 5 | 500 | 505 | |
| 16 | A | 1.5 | 40 | 20 | 0 | 20 | A | 1.5 | 40 | 20 | 0 | 20 | |
| 17 | A | 1.5 | 40 | 20 | 3 | 23 | A | 1.5 | 40 | 5 | 0 | 5 | |
| 18 | A | 1.5 | 40 | Straight line | >100000 | >100000 | A | 1.5 | 40 | Straight line | >100000 | > 100000 | Comparative Example |

(continued)

| No. | Steel sheet (before welding) | | | | | | | | | | | | | Remarks |
|---|---|---|---|---|---|---|---|---|---|---|---|---|---|---|
| | Steel sheet 2 | | | | | | | | | | | | | |
| | First surface (one surface) | | | | | | Second surface (the other surface) | | | | | | | |
| | Type of exposure | Width of exposed portion (mm) | Depth D (μm) | Curvature radius R1 on coated portion side (μm) | Curvature radius R2 on exposed portion side (μm) | R1 + R2 | Type of exposure | Width of exposed portion (mm) | Depth D (μm) | Curvature radius R1 on coated portion side (μm) | Curvature radius R2 on exposed portion side (μm) | R1 + R2 | | |
| 19 | A | 1.5 | 40 | 20 | 350 | 370 | A | 1.5 | 40 | 5 | 350 | 355 | | Invention Example |
| 20 | A | 1.5 | 40 | 20 | 500 | 520 | A | 1.5 | 40 | 20 | 500 | 520 | | |
| 21 | A | 1.5 | 40 | 20 | 500 | 520 | A | 1.5 | 40 | 20 | 500 | 520 | | |
| 22 | A | 1.5 | 40 | 20 | 500 | 520 | A | 1.5 | 40 | 20 | 500 | 520 | | |
| 23 | A | 1.5 | 40 | 20 | 500 | 520 | A | 1.5 | 40 | 20 | 500 | 520 | | |

[Table 6]

| No. | Butt-welded member $((D1+D2)/t) \times 100$ | Hot stamped product | | | | | | | Remarks |
|---|---|---|---|---|---|---|---|---|---|
| | | Static strength (MPs) | Static strength ratio (%) | Static strength level | Fatigue limit (MPa) | Fatigue limit ratio (%) | Fatigue level | Corrosion resistance after painting | |
| 1 | - | 1250 | 83 | C | 345 | 77 | C | A | Comparative Example |
| 2 | 4.2 | 1300 | 87 | C | 400 | 89 | C | A | |
| 3 | 6.7 | 1330 | 89 | C | 440 | 98 | B | C | |
| 4 | 12.3 | 1315 | 101 | A | 425 | 109 | A | A | Invention Example |
| 5 | 18.5 | 1310 | 101 | A | 415 | 106 | A | A | |
| 6 | 21.5 | 1300 | 100 | A | 400 | 103 | A | A | |
| 7 | 13.3 | 1315 | 101 | A | 410 | 105 | A | A | |
| 8 | 10.0 | 1330 | 102 | A | 415 | 106 | A | A | |
| 9 | 13.3 | 1320 | 102 | A | 425 | 109 | A | A | |
| 10 | 18.5 | 1310 | 101 | A | 420 | 108 | A | A | |
| 11 | 6.7 | 1330 | 102 | A | 425 | 109 | A | A | |
| 12 | 6.7 | 1320 | 102 | A | 420 | 108 | A | A | |
| 13 | 6.7 | 1330 | 102 | A | 425 | 109 | A | A | |
| 14 | 6.7 | 1320 | 102 | A | 420 | 108 | A | A | |
| 15 | 6.7 | 1330 | 102 | A | 425 | 109 | A | A | |
| 16 | 6.7 | 1230 | 95 | B | 365 | 94 | B | B | |
| 17 | 6.7 | 1220 | 94 | B | 360 | 92 | B | B | |
| 18 | 6.7 | 1320 | 102 | A | 370 | 95 | B | C | Comparative Example |

(continued)

| No. | Butt-welded member ((D1 + D2)/t) × 100 | Hot stamped product | | | | | | | Remarks |
|---|---|---|---|---|---|---|---|---|---|
| | | Static strength (MPs) | Static strength ratio (%) | Static strength level | Fatigue limit (MPa) | Fatigue limit ratio (%) | Fatigue level | Corrosion resistance after painting | |
| 19 | 6.7 | 1330 | 102 | A | 430 | 110 | A | A | Invention Example |
| 20 | 6.7 | 1000 | 102 | A | 320 | 109 | A | A | |
| 21 | 6.7 | 800 | 103 | A | 260 | 111 | A | A | |
| 22 | 6.7 | 605 | 103 | A | 195 | 110 | A | A | |
| 23 | 6.7 | 600 | 102 | A | 200 | 113 | A | A | |

In Tables 4 and 5, R1 of the steel sheets 1 and 2 of No. 2 represents the curvature radius in the aluminum coating layer, and R2 indicates the curvature radius in the end portion of the exposed portion on the coated portion side.

In Table 6, "((D1 + D2)/t) × 100" in the column of the butt-welded member is a value determined for a steel sheet having a smaller product of the sheet thickness of the steel sheet and the strength of the steel sheet after hot stamping of two steel sheets to be butt-welded, t represents the sheet thickness (in terms of $\mu$m), D1 represents the depth formed on the first surface ($\mu$m), and D2 represents the depth formed on the second surface ($\mu$m).

As shown in Tables 3 to 6, No. 1 which used a steel sheet in which neither the aluminum coating layer nor the intermetallic compound layer was removed is inferior in the fatigue strength.

In No. 2 which used a steel sheet in which the aluminum coating layer was removed, the intermetallic compound layer is allowed to remain, and the exposed portion of the base steel sheet was not provided, R1 satisfies 5 $\mu$m or more and thus the corrosion resistance after painting is excellent. However, since the intermetallic compound layer remains, the fatigue strength is inferior.

In No. 3 which used a steel sheet in which both the aluminum coating layer and the intermetallic compound layer were removed, the fatigue strength is excellent. However, since R1 is less than 5 $\mu$m, the corrosion resistance after painting is inferior.

In No. 18 which used a steel sheet having the shape shown in Fig. 10, the end portion on the coated portion side is not a curve but a straight line and R2 on the exposed portion side is more than 100000. Therefore, stress concentration due to a difference in hardness between the base steel sheet and the intermetallic compound layer occurs and the fatigue strength is inferior. Further, since R1 is less than 5 $\mu$m, the corrosion resistance after painting is also inferior.

On the other hand, as shown in Tables 3 to 6, in Nos. 4 to 17 and 19 to 23 which used steel sheets in which both the aluminum coating layer and the intermetallic compound layer were removed and R1 satisfies 5 $\mu$m or more, the fatigue strength and the corrosion resistance after painting are excellent.

[Brief Description of the Reference Symbols]

    12 Base steel sheet
    14 Aluminum coating layer
    16 Intermetallic compound layer
    22 Exposed portion
    26 Coated portion
    100 Steel sheet
    F1 First direction

**Claims**

1. A steel sheet comprising:

    a base steel sheet;
    a coated portion in which an intermetallic compound layer and an aluminum coating layer are provided on a surface of the base steel sheet in order from the base steel sheet side; and
    an exposed portion in which the base steel sheet is exposed,
    wherein in a first direction which is perpendicular to a thickness direction of the steel sheet and is directed from the coated portion to one end edge of the steel sheet, at least the coated portion, the exposed portion, and the end edge of the steel sheet are disposed in this order on both surfaces of the base steel sheet,
    when viewing a cross section parallel to each of the first direction and the thickness direction of the steel sheet, a shape of an end portion of the coated portion which is located on the end edge side of the steel sheet and located from an inner side of the base steel sheet toward the surface of the base steel sheet is a curve represented by a curvature radius R1 protruding toward the first direction side, and R1 satisfies the following Expression (1):

$$\text{Expression (1): } 5\ \mu\text{m} \le R1.$$

2. The steel sheet according to Claim 1, wherein, in the cross section, a shape of an end portion of the exposed portion on the coated portion side is a recessed curve represented by a curvature radius R2, and R2 satisfies the following

Expression (2):

$$\text{Expression (2): } 260\ \mu\text{m} \le R2.$$

3. The steel sheet according to Claim 2, wherein, in the cross section, when in a depth in the thickness direction from a virtual line formed by extending a surface of the aluminum coating layer of the coated portion in the first direction to the surface of the base steel sheet, a depth of the exposed portion is denoted by D, a relationship between D, R1, and R2 satisfies the following Expression (3);

$$\text{Expression (3): } D \le (R1 + R2).$$

4. The steel sheet according to any one of Claims 1 to 3, wherein the base steel sheet includes, as a chemical composition, by mass%,

C: 0.02% to 0.58%,
Mn: 0.20% to 3.00%,
Al: 0.005% to 0.06%,
P: 0.03% or less,
S: 0.010% or less,
N: 0.010% or less,
Ti: 0% to 0.20%,
Nb: 0% to 0.20%,
V: 0% to 1.0%,
W: 0% to 1.0%,
Cr: 0% to 1.0%,
Mo: 0% to 1.0%,
Cu: 0% to 1.0%,
Ni: 0% to 1.0%,
B: 0% to 0.0100%,
Mg: 0% to 0.05%,
Ca: 0% to 0.05%,
REM: 0% to 0.05%,
Sn: 0% to 0.5%,
Bi: 0% to 0.05%,
Si: 0% to 2.00%, and
a remainder: Fe and impurities.

5. The steel sheet according to any one of Claims 1 to 4, wherein an average thickness of the aluminum coating layer is 8 $\mu$m to 35 $\mu$m, and an average thickness of the intermetallic compound layer is 3 $\mu$m to 10 $\mu$m.

6. A tailored blank comprising a weld metal portion adjacent to the exposed portion of the steel sheet according to any one of Claims 1 to 5.

7. A tailored blank comprising at least two steel sheets according to any one of Claims 1 to 5; and a weld metal portion adjacent to the exposed portion, wherein in a steel sheet A having a smaller product of a sheet thickness of the steel sheet and a tensile strength of the steel sheet after hot press forming, of the at least two steel sheets,

when viewing the steel sheet A from a cross section parallel to each of a second direction which is directed from the coated portion to the weld metal portion and a thickness direction of the steel sheet, and a length in the thickness direction from a virtual line formed by extending a surface of the aluminum coating layer of the coated portion in the second direction to a surface of the base steel sheet is denoted as a depth of the exposed portion,
a depth D1 ($\mu$m) of the exposed portion formed on a surface of a first surface of the steel sheet A,
a depth D2 ($\mu$m) of the exposed portion formed on a surface of a second surface of the steel sheet A, and
a sheet thickness t ($\mu$m) of the steel sheet A satisfy the following Expression (4):

$$\text{Expression (4): } ((D1 + D2)/t) \times 100 \leq 20.$$

8. A hot stamped product using the tailored blank according to Claim 6 or 7.

9. A steel pipe comprising a weld metal portion adjacent to the exposed portion of the steel sheet according to any one of Claims 1 to 5.

10. A hollow hot stamped product using the steel pipe according to Claim 9.

11. A method of manufacturing the steel sheet according to any one of Claims 1 to 5 comprising:
   forming the exposed portion by cutting with an end mill.

FIG. 1

EP 3 812 082 A1

# FIG. 2

EP 3 812 082 A1

FIG. 3

EP 3 812 082 A1

FIG. 4

FIG. 5

EP 3 812 082 A1

# FIG. 6

EP 3 812 082 A1

# FIG. 7

EP 3 812 082 A1

FIG. 8

# FIG. 9

EP 3 812 082 A1

FIG. 10

101

14

16

12

F1

Z

Y

X

## INTERNATIONAL SEARCH REPORT

International application No.

PCT/JP2019/024696

### A. CLASSIFICATION OF SUBJECT MATTER

Int.Cl. B23K31/00(2006.01)i, B21C37/08(2006.01)i, B21D22/20(2006.01)i, C21D9/08(2006.01)i, C21D9/50(2006.01)i, C22C38/00(2006.01)i, C22C38/58(2006.01)i, C23C2/12(2006.01)i

According to International Patent Classification (IPC) or to both national classification and IPC

### B. FIELDS SEARCHED

Minimum documentation searched (classification system followed by classification symbols)

Int.Cl. B23K31/00, B21C37/08, B21D22/20, C21D9/08, C21D9/50, C22C38/00, C22C38/58, C23C2/12

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2017-209733 A (SHILOH INDUSTRIES, INC.) 30 November 2017, paragraphs [0012]-[0029], fig. 3-13 & US 2018/0193949 A1 & WO 2014/085818 A1 & CN 104822485 A & KR 10-2018-0034706 A | 1–11 |
| A | JP 2016-515943 A (SHILOH INDUSTRIES, INC.) 02 June 2016, paragraphs [0021]-[0034], fig. 6-15 & US 2014/0270922 A1 & WO 2014/153096 A1 & CN 105050760 A & KR 10-2015-0127693 A | 1–11 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 July 2019 (10.07.2019) | 23 July 2019 (23.07.2019) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

44

## INTERNATIONAL SEARCH REPORT

| | International application No. |
|---|---|
| | PCT/JP2019/024696 |

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2017/086431 A1 (G-TEKT CORPORATION) 26 May 2017, paragraphs [0017]-[0046], fig. 1-8 & US 2018/0345407 A1 & EP 3378592 A1 & CN 108290246 A | 1-11 |
| A | JP 3-94992 A (NISSHIN STEEL CO., LTD.) 19 April 1991, page 2, lower right column to page 6, upper left column, fig. 1-5 (Family: none) | 1-11 |
| A | DE 102011012008 A1 (VOLKSWAGEN AG) 23 August 2012, fig. 1-2 (Family: none) | 1-11 |
| A | DE 102008006624 A1 (THYSSENKRUPP STEEL AG) 30 July 2009, fig. 1-2 (Family: none) | 1-11 |

Form PCT/ISA/210 (continuation of second sheet) (January 2015)

**EP 3 812 082 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018119189 A
- JP 2018119190 A
- JP 2009534529 PCT
- JP 2015525677 PCT
- JP 2015523210 PCT
- JP 2015536246 PCT
- JP 2013220445 A
- CN 106334875
- JP 2016073989 A